(19) Europäisches Patentamt
European Patent Office
Office européen des brevets

(11) Veröffentlichungsnummer: **0 349 486**
**A2**

# (12) EUROPÄISCHE PATENTANMELDUNG

(21) Anmeldenummer: **89810476.5**

(22) Anmeldetag: **20.06.89**

(51) Int. Cl.⁵: **C 09 B 29/08**
D 06 P 1/18, C 07 C 309/17,
C 07 C 311/08, C 07 D 295/12

(30) Priorität: **29.06.88 CH 2471/88**

(43) Veröffentlichungstag der Anmeldung:
**03.01.90 Patentblatt 90/01**

(84) Benannte Vertragsstaaten:
**BE CH DE FR GB IT LI**

(71) Anmelder: **CIBA-GEIGY AG**
**Klybeckstrasse 141**
**CH-4002 Basel (CH)**

(72) Erfinder: **Walter, Harald, Dr.**
**Rufacherstrasse 20**
**CH-4055 Basel (CH)**

**Hurter, Rudolf**
**Laufenburgerstrasse 10/3**
**CH-4058 Basel (CH)**

## (54) Azofarbstoffe, deren Herstellung und Verwendung.

(57) Die Azofarbstoffe der Formel

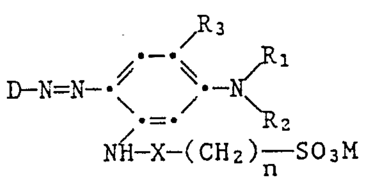

(1),

worin D eine Diazokomponente, $R_1$ und $R_2$ unabhängig voneinander je ein gegebenenfalls substituierter $C_1$-$C_{10}$-Alkyl-, $C_5$-$C_7$-Cycloalkyl-, Phenyl-oder Naphthyl-Rest, oder $R_1$ und $R_2$ zusammen mit dem sie verbindenden Stickstoffatom ein gegebenenfalls durch Heteroatome substituierter 5-, 6-oder 7-gliedriger Ring, $R_3$ Wasserstoff, Halogen oder ein gegebenenfalls substituierter $C_1$-$C_{10}$-Alkyl, $C_1$-$C_{10}$-Alkoxy- oder Phenoxy-Rest, X -CO-oder $-SO_2$-, n die Zahl 1, 2, 3, 4, 5 oder 6 und M ein Kation ist, ergeben auf stickstoffhaltigen oder hydroxylgruppenhaltigen Fasermaterialien Färbungen von guten Echtheiten.

EP 0 349 486 A2

Bundesdruckerei Berlin

**Beschreibung**

**Azofarbstoffe, deren Herstellung und Verwendung**

Die vorliegende Erfindung betrifft neue Azofarbstoffe, Verfahren zu deren Herstellung und die Verwendung dieser Farbstoffe zum Färben und Bedrucken von Fasermaterialien, insbesondere textilen Fasermaterialien.

Gegenstand der vorliegenden Erfindung sind Azofarbstoffe der Formel

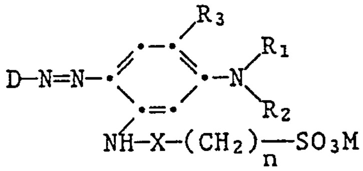

(1),

worin D eine Diazokomponente, $R_1$ und $R_2$ unabhängig voneinander je ein gegebenenfalls substituierter $C_1$-$C_{10}$-Alkyl-, $C_5$-$C_7$-Cycloalkyl-, Phenyl-oder Naphthyl-Rest oder $R_1$ und $R_2$ zusammen mit dem sie verbindenden Stickstoffatom ein gegebenenfalls durch Heteroatome substituierter 5-, 6-oder 7-gliedriger Ring, $R_3$ Wasserstoff, Halogen oder ein gegebenenfalls substituierter $C_1$-$C_{10}$-Alkyl-, $C_1$-$C_{10}$-Alkoxy- oder Phenoxy-Rest, X -CO-oder -$SO_2$-, n die Zahl 1, 2, 3, 4, 5 oder 6, insbesondere die Zahl 1 oder 2 und M ein Kation ist.

Der Rest D kann die bei Azofarbstoffen üblichen Substituenten enthalten, z.B. Alkylgruppen mit 1 bis 8, vorzugsweise 1 bis 4, Kohlenstoffatomen, wie z.B. Methyl, Aethyl, Propyl, Isopropyl, Butyl, Isobutyl, sek.-Butyl, tert.-Butyl, Hexyl, Octyl, Alkoxygruppen mit 1 bis 8 Kohlenstoffatomen, insbesondere 1 bis 4 Kohlenstoffatomen, wie z.B. Methoxy, Aethoxy, Propoxy, Isopropoxy, Butoxy, $C_2$-$C_8$-Alkanoyl, wie z.B. Acetyl, Propionyl, Isopropionyl, Butyryl oder Isobutyryl, Acylaminogruppen wie Alkanoylaminogruppen mit 2 bis 8 Kohlenstoffatomen und Alkoxycarbonylaminogruppen mit 2 bis 8 Kohlenstoffatomen wie z.B. Acetylamino, Propionylamino, Methoxycarbonylamino, Aethoxycarbonylamino, Benzoylamino, $C_5$-$C_7$-Cycloalkylcarbonyl, gegebenenfalls durch $C_1$-$C_4$-Alkyl und/oder Halogen substituiertes Benzoyl, Amino, Mono- oder Dialkylamino mit 1 bis 8 Kohlenstoffatomen im Alkylrest, Phenylamino, Alkoxycarbonyl mit 1 bis 8 Kohlenstoffatomen im Alkoxyrest, $C_5$-$C_7$-Cycloalkylaminosulfonyl, Nitro, Cyan, Trifluormethyl, Halogen, wie Fluor, Brom oder insbesondere Chlor, Sulfamoyl, am Stickstoffatom ein- oder zweifach durch $C_1$-$C_4$-Alkyl, $C_5$-$C_7$-Cycloalkyl oder Phenyl substituiertes Sulfamoyl, Carbamoyl, Ureido, Hydroxy, $C_1$-$C_8$-Alkylsulfonyl, $C_1$-$C_8$-Alkylaminosulfonyl, gegebenenfalls durch $C_1$-$C_4$-Alkyl und/oder Sulfo und/oder Halogen substituiertes Phenylsulfonyl oder Phenoxysulfonyl, Carboxy, Sulfomethyl, Sulfo, Sulfato, Thiosulfato, $C_1$-$C_8$-Alkylthio, wie z.B. Methyl-, Aethyl-, Propyl-, Isopropyl-, Butyl-, Isobutyl-, sek.-Butyl-, tert.-Butyl-, Pentyl-, Hexyl-oder Octylthio, gegebenenfalls durch $C_1$-$C_4$-Alkyl und/oder Halogen, wie z.B. Fluor, Brom oder insbesondere Chlor, substituiertes Benzisothiazolyl, Benzthiazolyl, Benzisooxazolyl oder Benzoxazolyl, Arylazogruppen wie z.B. die Phenylazo- und Naphthylazogruppe sowie Phenyl, Naphthyl, gegebenenfalls durch $C_1$-$C_4$-Alkyl und/oder Halogen substituiertes Phenoxy, Phenylaminosulfonyl, wobei die angegebenen Phenyl- oder Naphthylreste durch die oben angegebenen Substituenten weitersubstituiert sein können.

Als Halogen kommt für $R_3$ in Formel (1) z.B. in Betracht: Fluor, Brom und insbesondere Chlor.

Als $C_1$-$C_{10}$-Alkyl kommt für $R_1$, $R_2$ und $R_3$ in Formel (1) z.B. in Betracht: Methyl, Aethyl, Propyl, Isopropyl, Butyl, Isobutyl, sek.-Butyl, tert.-Butyl, Pentyl, Hexyl, Octyl oder Decyl, sowie die entsprechenden Reste, die z.B. durch Hydroxy, Alkoxy mit 1 bis 4 Kohlenstoffatomen, Phenyl, Sulfo, Sulfato, Thiosulfato, Cyan oder Halogen substituiert sind, z.B. β-Hydroxyäthyl, β-Methoxyäthyl, β-Chloräthyl, Benzyl, β-Sulfatoäthyl, γ-Methoxypropyl.

Als $C_1$-$C_{10}$-Alkoxy kommt für $R_3$ in Formel (1) z.B. in Betracht: Methoxy, Aethoxy, Propoxy, Isopropoxy, Butoxy, Isobutoxy, sek.-Butoxy, tert.-Butoxy, Hexyloxy und Octyloxy, sowie die entsprechenden Reste, die z.B. durch Alkoxy mit 1 bis 4 Kohlenstoffatomen substituiert sind, z.B. β-Methoxyäthoxy, β-Aethoxyäthoxy.

Als Phenoxy kommt für $R_3$ in Formel (1) ein unsubstituierter oder ein durch $C_1$-$C_4$-Alkyl wie Methyl, Aethyl, Propyl, Isopropyl, Butyl, Isobutyl, sek.-Butyl und tert.-Butyl, $C_1$-$C_4$-Alkoxy, wie Methoxy, Aethoxy, Propoxy, Isopropoxy, Butoxy, Isobutoxy, sek.-Butoxy und tert.-Butoxy, Halogen, wie Fluor, Chlor und Brom, $C_2$-$C_4$-Alkanoylamino, wie Acetylamino und Propionylamino, Benzoylamino und Sulfo substituierter Phenoxyrest in Betracht.

Als $C_5$-$C_7$-Cycloalkyl kommt für $R_1$ und $R_2$ in Formel (1) z.B. in Betracht: Cyclopentyl, Cyclohexyl und Cycloheptyl, sowie die entsprechenden Reste, die z.B. durch Halogen, wie Fluor, Chlor oder Brom, $C_1$-$C_4$-Alkyl, wie Methyl, Aethyl, Propyl, Isopropyl, Butyl, Isobutyl, sek.-Butyl und tert.-Butyl, $C_1$-$C_4$-Alkoxy, wie Methoxy, Aethoxy, Propoxy, Isopropoxy, Butoxy, Isobutoxy, sek.-Butoxy, und tert.-Butoxy substituiert sind. Als Beispiel sei der Methylcyclohexylrest genannt.

Als gegebenenfalls substituiertes Phenyl oder Naphthyl kommen für $R_1$ und $R_2$ in Formel (1) neben unsubstituiertem Phenyl oder Naphthyl solche Reste mit z.B. den folgenden Substituenten in Betracht: $C_1$-$C_4$-Alkyl, wie Methyl, Aethyl, Propyl, Isopropyl, Butyl, Isobutyl, sek.-Butyl und tert.-Butyl, $C_1$-$C_4$-Alkoxy, wie Methoxy, Aethoxy, Propoxy, Isopropoxy, Butoxy, Isobutoxy, sek.-Butoxy und tert.-Butoxy, Halogen, wie Fluor, Chlor und Brom, $C_2$-$C_4$-Alkanoylamino, wie Acetylamino und Propionylamino, Benzoylamino oder Sulfo.

$R_1$ und $R_2$ zusammen mit dem sie verbindenden Stickstoffatom können einen gegebenenfalls durch

Heteroatome, wie z.B. -O-,-S- oder -NH-, substituierten 5-, 6- oder 7-gliedrigen Ring bilden. Als Beispiele seien genannt: Piperazinyl, Piperidinyl, Morpholinyl.

M bedeutet ein Kation, insbesondere Wasserstoff, ein Alkali- oder Erdalkali-Ion, $NH_4^{\oplus}$ oder eine organische Ammoniumverbindung. Als Beispiele seien $H^{\oplus}$, $Na^{\oplus}$, $Li^{\oplus}$, $K^{\oplus}$, $NH_4^{\oplus}$ und $C_1$-$C_4$-Alkylammonium genannt.

Bevorzugt sind Azofarbstoffe der Formel (1), worin D der Rest einer Diazokomponente der Benzol- oder Naphthalinreihe oder der heterocyclischen Reihe ist, insbesondere bedeutet D Thienyl, Thiazolyl, 7-Oxotetra hydrobenzo[b]thiophenyl, Isothiazolyl, 1,2,4-Thiadiazolyl, 1,3,4-Thiadiazolyl, Benzthiazolyl, Benzisothiazolyl, Pyrazolyl, Imidazolyl, 1,2,3-Triazolyl, 1,2,4-Triazolyl, Thiophenyl, Benzthiophenyl, Tetrahydrobenzo[b]thiophenyl, Pyridinyl, Indazolyl, Phenyl oder Naphthyl, wobei jeder der genannten Reste substituiert sein kann, insbesondere durch $C_1$-$C_8$-Alkyl, $C_1$-$C_8$-Alkoxy, $C_2$-$C_8$-Alkanoyl, $C_2$-$C_8$-Alkanoylamino, $C_2$-$C_8$-Alkoxycarbonylamino, Benzoylamino, Amino, Mono- oder Dialkylamino mit 1 bis 8 Kohlenstoffatomen im Alkylrest, Phenylamino, $C_2$-$C_8$-Alkoxycarbonyl, Nitro, Cyan, Trifluormethyl, Halogen, Sulfamoyl, am Stickstoffatom ein-oder zweifach durch $C_1$-$C_4$-Alkyl, $C_5$-$C_7$-Cycloalkyl oder Phenyl substituiertes Sulfamoyl, Carbamoyl, Ureido, Hydroxy, $C_1$-$C_8$-Alkylsulfonyl, Phenylsulfonyl, durch $C_1$-$C_4$-Alkyl und/oder Sulfo und/oder Halogen substituiertes Phenylsulfonyl oder Phenoxysulfonyl, gegebenenfalls durch $C_1$-$C_4$-Alkyl und/oder Halogen substituiertes Phenoxy oder Benzoyl, $C_5$-$C_7$-Cycloalkylcarbonyl, $C_1$-$C_8$-Alkylthio, gegebenenfalls durch $C_1$-$C_4$-Alkyl und/oder Halogen substituiertes Benzisothiazolyl, Benzthiazolyl, Benzisooxazolyl oder Benzoxazolyl, Phenylazo, Carboxy, Sulfomethyl, Sulfo, Sulfato, Thiosulfato und gegebenenfalls können je 2 benachbarte Substituenten der genannten Ringsysteme weiter ankondensierte Phenylringe oder Cyclohexylringe bilden.

Insbesondere ist D Phenyl, Naphthyl, Thiophenyl, 7-Oxotetrahydrobenzo[b]thiophenyl, Tetrahydrobenzo[b]thiophenyl, Benzthiophenyl, Benzthiazolyl, Benzisothiazolyl oder 1,3,4-Thiadiazolyl, wobei die angegebenen Reste durch die oben aufgeführten Substituenten substituiert sein können.

Besonders bevorzugt sind Azofarbstoffe der Formel (1), worin D Phenyl, Naphthyl, Thiophenyl, 7-Oxotetrahydrobenzo[b]thiophenyl, Tetrahydrobenzo[b]thiophenyl, Benzthiophenyl, Benzthiazolyl, Benzisothiazolyl oder 1,3,4-Thiadiazolyl ist, wobei jeder der genannten Reste weitersubstituiert sein kann durch $C_1$-$C_8$-Alkyl, $C_1$-$C_8$-Alkoxy, $C_2$-$C_8$-Alkanoyl, $C_1$-$C_8$-Alkoxycarbonyl, Cyan, Trifluormethyl, Halogen, Sulfamoyl, am Stickstoffatom ein-oder zweifach durch $C_1$-$C_4$-Alkyl, $C_5$-$C_7$-Cycloalkyl oder Phenyl substituiertes Sulfamoyl, $C_1$-$C_8$-Alkylsulfonyl, Phenylsulfonyl, durch $C_1$-$C_4$-Alkyl und/oder Sulfo und/oder Halogen substituiertes Phenylsulfonyl oder Phenoxysulfonyl, gegebenenfalls durch $C_1$-$C_4$-Alkyl und/oder Halogen substituiertes Phenoxy oder Benzoyl, $C_5$-$C_7$-Cycloalkylcarbonyl, $C_1$-$C_8$-Alkylthio, gegebenenfalls durch $C_1$-$C_4$-Alkyl und/oder Halogen substituiertes Benzisothiazolyl, Benzthiazolyl, Benzisooxazolyl, Benzoxazolyl und Phenylazo.

Ganz besonders bevorzugt sind Azofarbstoffe der Formel (1), worin D den Rest der Formel

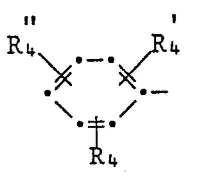 , 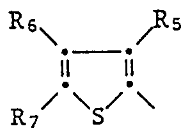 , 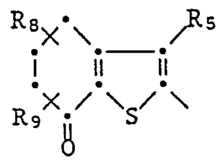 oder 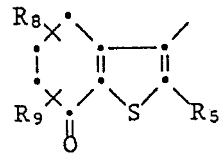

bedeutet, wobei $R_4$, $R_4'$ und $R_4''$ unabhängig voneinander jeweils Wasserstoff, ein gegebenenfalls am Stickstoffatom ein- oder zweifach durch $C_1$-$C_4$-Alkyl, $C_5$-$C_7$-Cycloalkyl oder Phenyl substituierter Sulfamoylrest, ein gegebenenfalls durch Halogen substituierter Phenoxysulfonylrest, $C_1$-$C_8$-Alkoxy, Trifluormethyl, Halogen, Sulfamoyl, $C_1$-$C_8$-Alkylsulfonyl, Phenylsulfonyl, durch $C_1$-$C_4$-Alkyl und/oder Halogen substituiertes Phenylsulfonyl, gegebenenfalls durch $C_1$-$C_4$-Alkyl substituiertes Phenoxy oder Phenylazo ist, $R_5$ -CN, -CON($R_{10}$)$R_{11}$, -CO$R_{12}$, -COO$R_{13}$, -$SO_2R_{14}$ der -CONHNH$R_{15}$, $R_6$ Wasserstoff oder $C_1$-$C_4$-Alkyl, $R_7$ ein gegebenenfalls über eine Carbonylgruppe gebundener gegebenenfalls substituierter $C_1$-$C_{10}$-Alkyl-, $C_1$-$C_{10}$-Alkoxy-, $C_5$-$C_7$-Cycloalkyl-, $C_5$-$C_7$-Cycloalkoxy-, Phenyl-, Phenoxy, Naphthyl-, Naphthoxy-, Thienyl-, Thiazolyl-, Isothiazolyl-, 1,2,4-Thiadiazolyl-, Benzthiazolyl-, Benzisothiazolyl-, Pyrazolyl-, Imidazolyl-, 1,2,3-Triazolyl-, 1,2,4-Triazolyl-, Thiophenyl-, Benzthiophenyl-, Tetrahydrobenzthiophenyl-, Pyridinyl-, Pyrimidinyl-, Indazolyl-, Oxazolyl-, Benzoxazolyl- oder Pyrazinyl-Rest, wobei die genannten Reste weiter substituiert sein können, und $R_8$ und $R_9$ unabhängig voneinander Wasserstoff, $C_1$-$C_4$-Alkyl oder Phenyl bedeuten, und worin $R_{10}$, $R_{11}$ und $R_{15}$ unabhängig voneinander Wasserstoff oder gegebenenfalls substituiertes $C_1$-$C_{10}$-Alkyl, $C_5$-$C_7$-Cycloalkyl, Phenyl oder Naphthyl, $R_{12}$, $R_{13}$ und $R_{14}$ gegebenenfalls substituiertes $C_1$-$C_{10}$-Alkyl, $C_5$-$C_7$-Cycloalkyl, Phenyl oder Naphthyl bedeuten, und Azofarbstoffe der Formel (1), worin D gegebenenfalls durch $C_1$-$C_8$-Alkyl und/oder Halogen substituiertes Benzisothiazolyl, durch $C_1$-$C_8$-Alkylthio substituiertes 1,3,4-Thiadiazolyl, durch Halogen, $C_1$-$C_8$-Alkoxy, $C_1$-$C_8$-Alkyl, $C_1$-$C_8$-Alkylsulfonyl oder $C_1$-$C_8$-Alkylthio substituiertes Benzthiazolyl, durch $C_1$-$C_8$-Alkoxycarbonyl substituiertes Tetrahydrobenzo[b]thiophenyl, durch $C_1$-$C_8$-Alkoxycarbonyl und/oder Halogen substituiertes Benzthiophenyl oder durch Sulfamoyl substituiertes Naphthyl ist.

Als gegebenenfalls substituiertes $C_1$-$C_{10}$-Alkyl kommen für $R_7$, $R_{10}$, $R_{11}$, $R_{12}$, $R_{13}$, $R_{14}$ und $R_{15}$ die für $R_1$ und $R_2$ angegebenen Bedeutungen in Betracht.

Als gegebenenfalls substituiertes $C_5$-$C_7$-Cycloalkyl kommen für $R_7$, $R_{10}$, $R_{11}$, $R_{12}$, $R_{13}$, $R_{14}$ und $R_{15}$ die für $R_1$ und $R_2$ angegebenen Bedeutungen in Betracht.

Als gegebenenfalls substituiertes Phenyl kommen für $R_7$, $R_8$, $R_9$, $R_{10}$, $R_{11}$, $R_{12}$, $R_{13}$, $R_{14}$ und $R_{15}$ neben unsubstituiertem Phenyl solche Reste mit z.B. den folgenden Substituenten in Betracht: $C_1$-$C_4$-Alkyl, wie Methyl, Aethyl, Propyl, Isopropyl, Butyl, Isobutyl, sek.-Butyl und tert.-Butyl, $C_1$-$C_4$-Alkoxy, wie Methoxy, Aethoxy, Propoxy, Isopropoxy, Butoxy, Isobutoxy, sek.-Butoxy und tert.-Butoxy, Halogen, wie Fluor, Chlor und Brom, $C_2$-$C_4$-Alkanoylamino, wie Acetylamino und Propionylamino, Benzoylamino oder Sulfo.

Als gegebenenfalls substituiertes Naphthyl kommen für $R_7$, $R_{10}$, $R_{11}$, $R_{12}$, $R_{13}$, $R_{14}$ und $R_{15}$ neben unsubstituiertem Naphthyl solche Reste mit z.B. den folgenden Substituenten in Betracht: $C_1$-$C_4$-Alkyl, wie Methyl, Aethyl, Propyl, Isopropyl, Butyl, Isobutyl, sek.-Butyl und tert.-Butyl, $C_1$-$C_4$-Alkoxy, wie Methoxy, Aethoxy, Propoxy, Isopropoxy, Butoxy, Isobutoxy, sek.-Butoxy und tert.-Butoxy, Halogen, wie Fluor, Chlor und Brom, $C_2$-$C_4$-Alkanoylamino, wie Acetylamino und Propionylamino, Benzoylamino oder Sulfo.

Als gegebenenfalls substituiertes $C_1$-$C_{10}$-Alkoxy kommt für $R_7$ z.B. in Betracht: Methoxy, Aethoxy, Propoxy, Isopropoxy, Butoxy, Isobutoxy, sek.-Butoxy, tert.-Butoxy, Hexyloxy und Octyloxy, sowie die entsprechenden Reste, die z.B. durch Alkoxy mit 1 bis 4 Kohlenstoffatomen substituiert sind, z.B. β-Methoxyäthoxy, β-Aethoxyäthoxy.

Als gegebenenfalls substituiertes Phenoxy kommt für $R_7$ ein unsubstituierter oder ein durch $C_1$-$C_4$-Alkyl wie Methyl, Aethyl, Propyl, Isopropyl, Butyl, Isobutyl, sek.-Butyl und tert.-Butyl, $C_1$-$C_4$-Alkoxy, wie Methoxy, Aethoxy, Propoxy, Isopropoxy, Butoxy, Isobutoxy, sek.-Butoxy und tert.-Butoxy, Halogen, wie Fluor, Chlor und Brom, $C_2$-$C_4$-Alkanoylamino, wie Acetylamino und Propionylamino, Benzoylamino und Sulfo substituierter Phenoxyrest in Betracht.

Als gegebenenfalls substituiertes Naphthoxy kommen für $R_7$ ein unsubstituierter oder ein durch $C_1$-$C_4$-Alkyl wie Methyl, Aethyl, Propyl, Isopropyl, Butyl, Isobutyl, sek.-Butyl und tert.-Butyl, $C_1$-$C_4$-Alkoxy, wie Methoxy, Aethoxy, Propoxy, Isopropoxy, Butoxy, Isobutoxy, sek.-Butoxy und tert.-Butoxy, Halogen, wie Fluor, Chlor und Brom, $C_2$-$C_4$-Alkanoylamino, wie Acetylamino und Propionylamino, Benzoylamino und Sulfo substituierter Napthoxyrest in Betracht.

Als $C_5$-$C_7$-Cycloalkoxy kommt für $R_7$ z.B. in Betracht: Cyclopentoxy, Cyclohexyloxy und Cycloheptyloxy, sowie die entsprechenden Reste, die z.B. durch Halogen, wie Fluor, Chlor oder Brom, $C_1$-$C_4$-Alkyl, wie Methyl, Aethyl, Propyl, Isopropyl, Butyl, Isobutyl, sek.-Butyl und tert.-Butyl, $C_1$-$C_4$-Alkoxy, wie Methoxy, Aethoxy, Propoxy, Isopropoxy, Butoxy, Isobutoxy, sek.-Butoxy, und tert.-Butoxy substituiert sind. Als Beispiel sei der Methylcyclohexyloxyrest genannt.

Als $C_1$-$C_4$-Alkyl kommt für $R_6$, $R_8$ und $R_9$ z.B. in Betracht: Methyl, Aethyl, n-Propyl, Isopropyl, n-Butyl, Isobutyl, tert.-Butyl.

Als $C_1$-$C_8$-Alkyl-Substituent des Benzisothiazolyl- oder Benzthiazolyl-Restes D kommt z.B. Methyl, Aethyl, Propyl, Isopropyl, Butyl, Isobutyl, sek.-Butyl, tert.-Butyl, Pentyl, Hexyl, Heptyl oder Octyl, insbesondere Methyl, in Betracht.

Als $C_1$-$C_8$-Alkoxy kommt für $R_4$, $R_4'$, $R_4''$ und als Substituent des Benzthiazolyl-Restes D unabhängig voneinander z.B. Methoxy, Aethoxy, Propoxy, Isopropoxy, Butoxy, Isobutoxy, sek.-Butoxy, tert.-Butoxy, Pentyloxy, Hexyloxy, Heptyloxy oder Octyloxy, insbesondere Methoxy, in Betracht.

Als Halogen kommt für $R_4$, $R_4'$, $R_4''$ und als Substituent des Benzisothiazolyl-, Benzthiazolyl- oder Benzthiophenyl-Restes D unabhängig voneinander z.B. Fluor, Brom oder insbesondere Chlor in Betracht.

Als $C_1$-$C_8$-Alkylsulfonyl kommt für $R_4$, $R_4'$, $R_4''$ und als Substituent des Benzthiazolyl-Restes D unabhängig voneinander z.B. Methyl-, Aethyl-, Propyl-, Isopropyl-, Butyl-, Isobutyl-, sek.-Butyl-, tert.-Butyl-, Pentyl-, Hexyl-, Heptyl- oder Octylsulfonyl, insbesondere Methyl- oder Aethylsulfonyl, in Betracht.

Als $C_1$-$C_8$-Alkoxycarbonyl kommt als Substituent des Tetrahydrobenzo[b]thiophenyl- oder Benzthiophenyl-Restes D z.B. Methoxy-, Aethoxy-, Propoxy-, Isopropoxy-, Butoxy-, Isobutoxy-, sek.-Butoxy-, tert.-Butoxy-, Pentyloxy-, Hexyloxy-, Heptyloxy- oder Octyloxycarbonyl, insbesondere Methoxycarbonyl, in Betracht.

Als $C_1$-$C_8$-Alkylthio kommt als Substituent des Benzthiazolyl- oder 1,3,4-Thiadiazolyl-Restes D z.B. Methyl-, Aethyl-, Propyl-, Isopropyl-, Butyl-, Isobutyl-, sek.-Butyl-, tert.-Butyl-, Pentyl-, Hexyl-, Heptyl-oder Octylthio, insbesondere Methyl-, Aethyl- oder Hexylthio, in Betracht.

Für $R_4$, $R_4'$ und $R_4''$ kommen ferner unabhängig voneinander z.B. in Betracht: N-Methyl-N-cyclohexylsulfamoyl, N-Aethyl-N-phenylsulfamoyl, Phenoxysulfonyl, o-Chlorphenoxysulfonyl, Brom, Chlor, Sulfamoyl, Methoxy, Aethoxy, N-Phenylsulfamoyl, N,N-Dimethylsulfamoyl, N,N-Diäthylsulfamoyl, Phenylsulfonyl, p-Methylphenylsulfonyl, p-Chlorphenylsulfonyl, o-Methylphenoxy, Phenoxy, Phenylazo, Methylsulfonyl, Aethylsulfonyl, Trifluormethyl.

Als $C_1$-$C_4$-Alkyl kommt für $R_8$ und $R_9$ z.B. in Betracht: Methyl, Aethyl, n-Propyl, Isopropyl, n-Butyl, sek.-Butyl, Isobutyl, tert.-Butyl.

Insbesondere enthalten die Azofarbstoffe der Formel (1) nur eine einzige Sulfonsäuregruppe.

Besonders bevorzugt sind Azofarbstoffe der Formel (1), worin $R_1$ und $R_2$ unabhängig voneinander $C_1$-$C_4$-Alkyl oder Benzyl bedeuten; insbesondere wenn diese Azofarbstoffe die bevorzugten und besonders bevorzugten Reste D enthalten.

Besonders bevorzugt sind ferner Azofarbstoffe der Formel (1), worin $R_3$ Wasserstoff, $C_1$-$C_4$-Alkyl, $C_1$-$C_4$-Alkoxy oder Chlor ist; insbesondere wenn diese Azofarbstoffe die besonders bevorzugten Reste $R_1$ und $R_2$ sowie die bevorzugten, besonders bevorzugten und ganz besonders bevorzugten Reste D enthalten.

Die Azofarbstoffe der Formel (1), worin X -CO- bedeutet sind besonders bevorzugt; insbesondere wenn diese Azofarbstoffe die zuvor angegebenen bevorzugten Reste D, $R_1$, $R_2$ und $R_3$ enthalten.

Die Azofarbstoffe der Formel (1), worin n die Zahl 1 oder 2 bedeutet sind ebenfalls besonders bevorzugt;

insbesondere wenn diese Azofarbstoffe die zuvor angegebenen bevorzugten Reste D, $R_1$, $R_2$, $R_3$ und X enthalten.

Ganz besonders wichtig sind die Azofarbstoffe der Formel

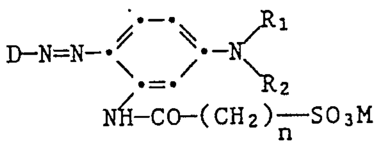
(2),

worin D durch N-Methyl-N-cyclohexylsulfamoyl, N-Aethyl-N-phenylsulfamoyl, N-Methyl-N-cycloheptylsulfamoyl, 2′-Chlorphenoxysulfonyl, Chlor, Sulfamoyl, Methoxy, N-Phenylsulfamoyl, N,N-Dimethylsulfamoyl, Phenylsulfonyl, p-Methylphenylsulfonyl, p-Chlorphenylsulfonyl, o-Methylphenoxy, Phenoxy, Phenylazo, Methylsulfonyl, Aethylsulfonyl oder Trifluormethyl substituiertes Phenyl, 3,5-Diäthoxycarbonyl-4-methylthiophenyl, 3-Methoxycarbonyl-5-isobutyrylthiophenyl, 3-Methoxycarbonyl-5-cyclohexylcarbonylthiophenyl, 3-Methoxycarbonyl-5-(4′-methylbenzoyl)thiophenyl, 3-Aethoxycarbonyl-5-(benzthiazol-2′-yl)thiophenyl, 3-Aethoxycarbonyl-5-(benzoxazol-2′-yl)thiophenyl, 3-Cyan-5-(benzthiazol-2′-yl)thiophenyl, 3,5-Dimethoxycarbonyl-4-methylthiophenyl, 7-Oxo-3-methoxycarbonyl-4,5,6,7-tetrahydrobenzo[b]thiophenyl, 7-Oxo-3-methoxy-6-methyl-4,5,6,7-tetrahydrobenzo[b]thiophenyl, 7-Oxo-3-cyan-5,5-dimethyl-4,5,6,7-tetra hydrobenzo[b]thiophenyl, 2-Methoxycarbonyl-4,5,6,7-tetrahydrobenzo[b]thiophenyl, 3-Methoxycarbonyl-4,5,6,7-tetrahydrobenzo[b]thiophenyl, 2-Methoxycarbonyl-4-chlorbenzo[b]thiophenyl, 3-Methoxycarbonylbenzo[b]thiophenyl, Benzthiazolyl, 6-Chlorbenzthiazolyl, 6-Methoxybenzthiazolyl, 6-Methylbenzthiazolyl, 4-Chlorbenzthiazolyl, 4-Methylbenzthiazolyl, 6-Methylsulfonylbenzthiazolyl, 6-Methylthiobenzthiazolyl, Benzisothiazolyl, 5-Chlorbenzisothiazolyl, 5-Aethylthio-1,3,4-thiadiazolyl, 5-Hexylthio-1,3,4-thiadiazolyl, 5-Sulfamoylnaphthyl, $R_1$ Aethyl und $R_2$ Aethyl oder Benzyl, n die Zahl 1 oder 2 und M Wasserstoff, ein Alkalimetallkation, Ammonium oder $C_1$-$C_4$-Alkylammonium ist.

Gegenstand der Erfindung ist ferner ein Verfahren zur Herstellung der Azofarbstoffe der Formel (1), welches dadurch gekennzeichnet ist, dass man ein Amin der Formel

D-$NH_2$ (3)

diazotiert und auf eine Kupplungskomponente der Formel

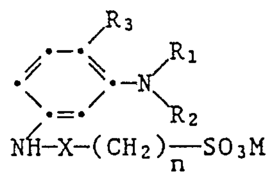
(4)

kuppelt, wobei D, $R_1$, $R_2$, $R_3$, X, M und n in den Formeln (3) und (4) die unter Formel (1) angegebenen Bedeutungen haben.

Die Diazotierung der Diazokomponente der Formel (3) erfolgt in der Regel durch Einwirken salpetriger Säure in wässrig-mineralsaurer Lösung bei tiefer Temperatur, die Kupplung auf die Kupplungskomponente der Formel (4) bei sauren, neutralen bis alkalischen pH-Werten.

Gegebenenfalls kann eine freie Aminogruppe im Rest D nach der Kupplung mit einem Acylierungs- oder Alkylierungsmittel in eine Acylamino- oder Alkylaminogruppe umgewandelt werden, und ebenso kann eine Hydroxygruppe durch Acylierung oder Alkylierung in eine Acyloxy oder Alkoxygruppe überführt werden.

Ferner kann eine freie Hydroxygruppe in eine wasserlöslichmachende Gruppe, wie z.B. durch Sulfatierung in eine Sulfatogruppe, überführt werden.

Vorzugsweise werden in den erfindungsgemässen Verfahren Amine der Formel (3) verwendet, worin D eine Diazokomponente der Benzol- oder Naphthalinreihe oder der heterocyclischen Reihe ist, insbesondere verwendet man Diazokomponenten worin D Thienyl, Thiazolyl, 7-Oxotetrahydrobenzo[b]thiophenyl, Isothiazolyl, 1,2,4-Thiadiazolyl, 1,3,4-Thiadiazolyl, Benzthiazolyl, Benzisothiazolyl, Pyrazolyl, Imidazolyl, 1,2,3-Triazolyl, 1,2,4-Triazolyl, Thiophenyl, Benzthiophenyl, Tetrahydrobenzthiophenyl, Pyridinyl, Indazolyl, Phenyl oder Naphthyl ist, wobei jeder der genannten Reste substituiert sein kann durch $C_1$-$C_8$-Alkyl, $C_1$-$C_8$-Alkoxy, $C_2$-$C_8$-Alkanoyl, $C_2$-$C_8$-Alkanoylamino, $C_1$-$C_8$-Alkoxycarbonylamino, Benzoylamino, Amino, Mono- oder Dialkylamino mit 1 bis 8 Kohlenstoffatomen im Alkylrest, Phenylamino, $C_2$-$C_8$-Alkoxycarbonyl, Nitro, Cyan, Trifluormethyl, Halogen, Sulfamoyl, am Stickstoffatom ein- oder zweifach durch $C_1$-$C_4$-Alkyl, $C_5$-$C_7$-Cycloalkyl oder Phenyl substituiertes Sulfamoyl, Carbamoyl, Ureido, Hydroxy, $C_1$-$C_8$-Alkylsulfonyl, Phenylsulfonyl, durch $C_1$-$C_4$-Alkyl und/oder Sulfo und/oder Halogen substituiertes Phenylsulfonyl oder Phenoxysulfonyl, gegebenenfalls durch $C_1$-$C_4$-Alkyl und/oder Halogen substituiertes Phenoxy oder Benzoyl, $C_5$-$C_7$-Cycloalkylcarbonyl, $C_1$-$C_8$-Alkylthio, gegebenenfalls durch $C_1$-$C_4$-Alkyl und/oder Halogen substituiertes Benzisothiazolyl, Benzthiazolyl, Benzisooxazolyl oder Benzoxazolyl, Phenylazo, Carboxy, Sulfomethyl, Sulfo, Sulfato, Thiosulfato und gegebenenfalls können je 2 benachbarte Substituenten der genannten Ringsysteme weiter ankondensierte Phenylringe oder Cyclohexylringe bilden.

Insbesondere verwendet man in dem erfindungsgemässen Verfahren als Diazokomponente D Phenyl, Naphthyl, Thiophenyl, 7-Oxotetrahydrobenzo[b]thiophenyl, Tetrahydrobenzo[b]thiophenyl, Benzthiophenyl,

Benzthiazolyl, Benzisothiazolyl oder 1,3,4-Thiadiazolyl, wobei die angegebenen Reste durch die oben aufgeführten Substituenten substituiert sein können.

Bevorzugte Ausführungsformen des erfindungsgemässen Verfahrens sind dadurch gekennzeichnet, dass man eine Diazokomponente der Formel (3) verwendet, worin D Phenyl, Naphthyl, Thiophenyl, 7-Oxotetrahydrobenzo[b]thiophenyl, Tetrahydrobenzo[b]thiophenyl, Benzthiophenyl, Benzthiazolyl, Benzisothiazolyl oder 1,3,4-Thiadiazolyl ist, wobei jeder der genannten Reste weitersubstituiert sein kann durch $C_1$-$C_8$-Alkyl, $C_1$-$C_8$-Alkoxy, $C_2$-$C_8$-Alkanoyl, $C_1$-$C_8$-Alkoxycarbonyl, Cyan, Trifluormethyl, Halogen, Sulfamoyl, am Stickstoffatom ein- oder zweifach durch $C_1$-$C_4$-Alkyl, $C_5$-$C_7$-Cycloalkyl oder Phenyl substituiertes Sulfamoyl, $C_1$-$C_8$-Alkylsulfonyl, Phenylsulfonyl, durch $C_1$-$C_4$-Alkyl und/oder Sulfo und/oder Halogen substituiertes Phenylsulfonyl oder Phenoxysulfonyl, gegebenenfalls durch $C_1$-$C_4$-Alkyl und/oder Halogen substituiertes Phenoxy oder Benzoyl, $C_5$-$C_7$-Cycloalkylcarbonyl, $C_1$-$C_8$-Alkylthio, gegebenenfalls durch $C_1$-$C_4$-Alkyl und/oder Halogen substituiertes Benzisothiazolyl, Benzthiazolyl, Benzisooxazolyl, Benzoxazolyl oder Phenylazo.

Weitere bevorzugte Ausführungsformen des erfindungsgemässen Verfahrens sind dadurch gekennzeichnet, dass man als Diazokomponente D den Rest der Formel

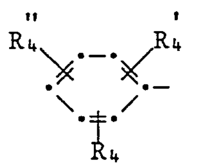 , 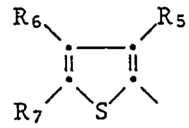 , 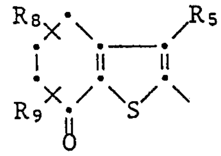 oder 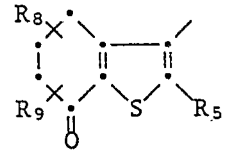

verwendet, wobei $R_4$, $R_4'$ und $R_4''$ unabhängig voneinander jeweils Wasserstoff, ein gegebenenfalls am Stickstoffatom ein- oder zweifach durch $C_1$-$C_4$-Alkyl, $C_5$-$C_7$-Cycloalkyl oder Phenyl substituierter Sulfamoylrest, ein gegebenenfalls durch Halogen substituierter Phenoxysulfonylrest, $C_1$-$C_8$-Alkoxy, Trifluormethyl, Halogen, Sulfamoyl, $C_1$-$C_8$-Alkylsulfonyl, Phenylsulfonyl, durch $C_1$-$C_4$-Alkyl und/oder Halogen substituiertes Phenylsulfonyl, gegebenenfalls durch $C_1$-$C_4$-Alkyl substituiertes Phenoxy oder Phenylazo ist, $R_5$ -CN, -CON($R_{10}$)$R_{11}$, -CO$R_{12}$, -COO$R_{13}$, -SO$_2$$R_{14}$ oder -CONHNH$R_{15}$, $R_6$ Wasserstoff oder $C_1$-$C_4$-Alkyl, $R_7$ ein gegebenenfalls über eine Carbonylgruppe gebundener gegebenenfalls substituierter $C_1$-$C_{10}$-Alkyl-, $C_1$-$C_{10}$-Alkoxy-, $C_5$-$C_7$-Cycloalkyl-, $C_5$-$C_7$-Cycloalkoxy-, Phenyl-, Phenoxy-, Naphthyl-, Naphthoxy-, Thienyl-, Thiazolyl-, Isothiazolyl-, 1,2,4-Thiadiazolyl-, Benzthiazolyl-, Benzisothiazolyl-, Pyrazolyl-, Imidazolyl-, 1,2,3-Triazolyl-, 1,2,4-Triazolyl-, Thiophenyl-, Benzthiophenyl-, Tetrahydrobenzthiophenyl-, Pyridinyl-, Pyrimidinyl-, Indazolyl-, Oxazolyl-, Benzoxazolyl- oder Pyrazinyl-Rest, wobei die genannten Reste weiter substituiert sein können, und $R_8$ und $R_9$ unabhängig voneinander Wasserstoff, $C_1$-$C_4$-Alkyl oder Phenyl bedeuten, und worin $R_{10}$, $R_{11}$ und $R_{15}$ unabhängig voneinander Wasserstoff oder gegebenenfalls substituiertes $C_1$-$C_{10}$-Alkyl, $C_5$-$C_7$-Cycloalkyl, Phenyl oder Naphthyl, $R_{12}$, $R_{13}$ und $R_{14}$ gegebenenfalls substituiertes $C_1$-$C_{10}$-Alkyl, $C_5$-$C_7$-Cycloalkyl, Phenyl oder Naphthyl bedeuten, oder als Diazokomponente D gegebenenfalls durch $C_1$-$C_8$-Alkyl und/oder Halogen substituiertes Benzisothiazolyl, durch $C_1$-$C_8$-Alkylthio substituiertes 1,3,4-Thiadiazolyl, durch Halogen, $C_1$-$C_8$-Alkoxy, $C_1$-$C_8$-Alkyl, $C_1$-$C_8$-Alkylsulfonyl oder $C_1$-$C_8$-Alkylthio substituiertes Benzthiazolyl, durch $C_1$-$C_8$-Alkoxycarbonyl substituiertes Tetrahydrobenzo[b]thiophenyl, durch $C_1$-$C_8$-Alkoxycarbonyl und/oder Halogen substituiertes Benzthiophenyl oder durch Sulfamoyl substituiertes Naphthyl verwendet.

Insbesondere werden in dem erfindungsgemässen Verfahren Amine der Formel (3) und Kupplungskomponenten der Formel (4) verwendet, die zusammen nur eine einzige Sulfonsäuregruppe enthalten.

Eine besonders bevorzugte Ausführungsform des erfindungsgemässen Verfahrens ist dadurch gekennzeichnet, dass man eine Kupplungskomponente der Formel (4) verwendet, worin $R_1$ und $R_2$ unabhängig voneinander $C_1$-$C_4$-Alkyl bedeuten.

Eine ebenfalls besonders bevorzugte Ausführungsform des erfindungsgemässen Verfahrens ist dadurch gekennzeichnet, dass man eine Kupplungskomponente der Formel (4) verwendet, worin $R_3$ Wasserstoff, $C_1$-$C_4$-Alkyl, $C_1$-$C_4$-Alkoxy oder Chlor bedeutet; insbesondere verwendet man eine Kupplungskomponente der Formel (4), worin $R_1$, $R_2$ und $R_3$ die besonders bevorzugten Bedeutungen haben.

Eine weitere besonders bevorzugte Ausführungsform des erfindungsgemässen Verfahrens ist dadurch gekennzeichnet, dass man eine Kupplungskomponente der Formel (4) verwendet, worin X -CO- bedeutet; insbesondere verwendet man eine Kupplungskomponente der Formel (4), worin $R_1$, $R_2$, $R_3$ und X die besonders bevorzugten Bedeutungen haben.

Eine weitere besonders bevorzugte Ausführungsform des erfindungsgemässen Verfahrens ist dadurch gekennzeichnet, dass man eine Kupplungskomponente der Formel (4) verwendet, worin n die Zahl 1 oder 2 ist; insbesondere verwendet man eine Kupplungskomponente der Formel (4), worin $R_1$, $R_2$, $R_3$, X und n die besonders bevorzugten Bedeutungen haben.

Die besonders wichtigen Azofarbstoffe der Formel (2) werden hergestellt, indem man ein Amin der Formel (3), worin D die unter Formel (2) angegebene Bedeutung hat, diazotiert und auf eine Kupplungskomponente der Formel

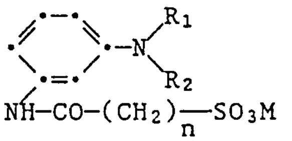 (5)

worin $R_1$, $R_2$, n und M die unter Formel (2) angegebenen Bedeutungen haben, kuppelt.

Aus der grossen Zahl möglicher Amine der Formel (3) kommen z.B. in Betracht: 2-Amino-3-methoxycarbonyl-5-phenylthiophen, 2-Amino-3-carbonamido-5-phenylthiophen, 2-Amino-3-methoxycarbonylthiophen, 2-Amino-3-methoxycarbonyl-5-benzoylthiophen, 2-Amino-3-methoxycarbonyl-5-isobutyrylthiophen, 2-Amino-3-phenylsulfonyl-5-acetylthiophen, 2-Amino-3-methylsulfonylacetylthiophen, 2-Amino-3-carbonamido-5-äthoxycarbonylthiophen, 2-Amino-3-carbonamido-5-butyrylthiophen, 2-Amino-3-β-hydroxyäthylaminocarbonyl-5-isobutyrylthiophen, 2-Amino-3-β-sulfatoäthylaminocarbonyl-5-isobutyrylthiophen (hergestellt durch Sulfatierung von 2-Amino-3-β-hydroxyäthylaminocarbonyl-5-butyrylthiophen), 2-Amino-3-γ-methoxypropylaminocarbonyl-5-isobutyrylthiophen, 2-Amino-3-butylaminocarbonyl-5-isobutyrylthiophen, 2-Amino-3-phenylsulfonylthiophen, 2-Amino-3-äthoxycarbonyl-4-methyl-5-propionylthiophen, 2-Amino-3-methoxycarbonyl-4-methyl-5-acetylthiophen, 2-Amino-3-methoxycarbonyl-5-cyclohexylcarbonylthiophen, 2-Amino-3-methoxy-carbonyl-5-(p-methylbenzoyl)-thiophen, 2-Amino-3-methoxycarbonyl-5-(p-methoxybenzoyl)-thiophen, 2-Amino-3-methoxycarbonyl-5-(p-chlorbenzoyl)-thiophen, 2-Amino-3-methoxycarbonyl-5-(o-, m- oder p-sulfobenzoyl)-thiophen, 2-Amino-3,5-diäthoxycarbonyl-4-methyl thiophen, 2-Amino-3,5-dimethoxycarbonyl-4-methylthiophen, 2-Amino-3-äthoxycarbonyl-5-(benzthiazol-2′-yl)-thiophen, 2-Amino-3-äthoxycarbonyl-5-(benzoxazol-2′-yl)-thiophen, 2-Amino-3-cyan-5-(benzthiazol-2′-yl)-thiophen, 2-Amino-1,3-benzthiazol, 2-Amino-6-methyl-1,3-benzthiazol, 2-Amino-6-äthyl-1,3-benzthiazol, 2-Amino-6-tert.-butyl-1,3-benzthiazol, 2-Amino-4-methyl-1,3-benzthiazol, 2-Amino-4-propyl-1,3-benzthiazol, 2-Amino-4,6-dimethyl-1,3-benzthiazol, 2-Amino-5-methyl-1,3-benzthiazol, 2-Amino-6-β-hydroxyäthyl-1,3-benzthiazol, 2-Amino-6-methoxy-1,3-benzthiazol, 2-Amino-6-äthoxy-1,3-benzthiazol, 2-Amino-6-propoxy-1,3-benzthiazol, 2-Amino-6-butoxy-1,3-benzthiazol, 2-Amino-4-methoxy-1,3-benzthiazol, 2-Amino-4-äthoxy-1,3-benzthiazol, 2-Amino-4,6-dimethoxy-1,3-benzthiazol, 2-Amino-5,6-dimethoxy-1,3-benzthiazol, 2-Amino-5-methoxy-6-äthoxy-1,3-benzthiazol, 2-Amino-6-hydroxyäthoxy-1,3-benzthiazol, 2-Amino-6-äthoxy-1,3-benzthiazol, 2-Amino-6-phenyl-1,3-benzthiazol, 2-Amino-6-(4′-chlorphenyl)-1,3-benzthiazol, 2-Amino-6-phenoxy-1,3-benzthiazol, 2-Amino-6-(4′-chlorphenoxy)-1,3-benzthiazol, 2-Amino-6-(4′-methylphenoxy)1,3-benzthiazol, 2-Amino-6-(2′,4′-dichlorphenoxy)-1,3-benzthiazol, 2-Amino-6-methylthio-1,3-benzthiazol, 2-Amino-6-propylthio-1,3-benzthiazol, 2-Amino-6-hydroxyäthylthio-1,3-benzthiazol, 2-Amino-6-chlor-1,3-benzthiazol, 2-Amino-4-chlor-1,3-benzthiazol, 2-Amino-5-chlor-1,3-benzthiazol, 2-Amino-4,6-dichlor-1,3-benzthiazol, 2-Amino-5,6-dichlor-1,3-benzthiazol, 2-Amino-4,5,6,7-tetrachlor-1,3-benzthiazol, 2-Amino-4-brom-1,3-benzthiazol, 2-Amino-6-brom-1,3-benzthiazol, 2-Amino-5-brom-1,3-benzthiazol, 2-Amino-6-fluor-1,3-benzthiazol, 2-Amino-6-trifluormethyl-1,3-benzthiazol, 2-Amino-4-trifluormethyl-1,3-benzthiazol, 2-Amino-6-nitro-1,3-benzthiazol, 2-Amino-6-cyan-1,3-benzthiazol, 2-Amino-6-formylamino-1,3-benzthiazol, 2-Amino-6-acetylamino-1,3-benzthiazol, 2-Amino-6-propionylamino-1,3-benzthiazol, 2-Amino-6-benzoylamino-1,3-benzthiazol, 2-Amino-6-(4′-methylbenzoylamino)-1,3-benzthiazol, 2-Amino-6-(4′-chlorbenzoylamino)-1,3-benzthiazol, 2-Amino-6-methylsulfonyloxy-1,3-benzthiazol, 2-Amino-6-äthylsulfonyloxy-1,3-benzthiazol, 2-Amino-6-phenylsulfonyloxy-1,3-benzthiazol, 2-Amino-6-methoxycarbonyl-1,3-benzthiazol, 2-Amino-6-äthoxycarbonyl-1,3-benzthiazol, 2-Amino-6-propoxycarbonyl-1,3-benzthiazol, 2-Amino-6-butoxycarbonyl-1,3-benzthiazol, 2-Amino-4-methoxycarbonyl-1,3-benzthiazol, 2-Amino-4-äthoxycarbonyl-1,3-benzthiazol, 2-Amino-6-β-hydroxyäthoxy-carbonyl-1,3-benzthiazol, 2-Amino-6-β-hydroxypropoxycarbonyl-1,3-benzthiazol, 2-Amino-6- methoxyäthoxycarbonyl-1,3-benzthiazol, 2-Amino-6-methoxy-propoxycarbonyl-1,3-benzthiazol, 2-Amino-6-phenoxycarbonyl-1,3-benzthiazol, 2-Amino-6-cyclohexyloxycarbonyl-1,3-benzthiazol, 2-Amino-6-methylsulfonyl-1,3-benzthiazol, 2-Amino-6-äthylsulfonyl-1,3-benzthiazol, 2-Amino-4-methylsulfonyl-1,3-benzthiazol, 2-Amino-4-butylsulfonyl-1,3-benzthiazol, 2-Amino-6-β-cyanäthylsulfonyl-1,3-benzthiazol, 2-Amino-6-β-chloräthylsulfonyl-1,3-benzthiazol, 2-Amino-6-β-hydroxyäthylsulfonyl-1,3-benzthiazol, 2-Amino-6-methoxysulfonyl-1,3-benzthiazol, 2-Amino-6-äthoxysulfonyl-1,3-benzthiazol, 2-Amino-6-phenoxysulfonyl-1,3-benzthiazol, 2-Amino-6-aminosulfonyl-1,3-benzthiazol, 2-Amino-6-dimethylamino-sulfonyl-1,3-benzthiazol, 2-Amino-6-phenylaminosulfonyl-1,3-benzthiazol, 2-Amino-6-isopropylaminosulfonyl-1,3-benzthiazol, 2-Amino-6-dibutylaminosulfonyl-1,3-benzthiazol, 2-Amino-6-benzylaminosulfonyl-1,3-benzthiazol, 2-Amino-6-cyclohexylamino-sulfonyl-1,3-benzthiazol, 2-Amino-β-hydroxyäthylaminosulfonyl-1,3-benzthiazol, 2-Amino-6-morpholinosulfonyl-1,3-benzthiazol, 2-Amino-1,3-benzthiazol-6-sulfonsäure, 2-Amino-1,3-benzthiazol-4-sulfonsäure, 5-Amino-1,2,4-thiadiazol, 5-Amino-3-methyl-1,2,4-thiadiazol, 5-Amino-3-phenyl-1,2,4-thiadiazol, 5-Amino-3-(2′-cyanphenyl)-1,2,4-thiadiazol, 2-Amino-1,3,4-thiadiazol, 2-Amino-5-methyl-1,3,4-thiadiazol, 2-Amino-5-methylmercapto-1,3,4-thiadiazol, 2-Amino-5-äthylthio-1,3,4-thiadiazol, 2-Amino-5-hexylthio-1,3,4-thiadiazol, 2-Amino-5-phenyl-1,3,4-thiadiazol, 2-Amino-1,3,4-oxdiazol, 2-Amino-5-methyl-1,3,4-oxdiazol, 2-Amino-5-phenyl-1,3,4-oxdiazol, 3-Amino-2,1-benzisothiazol, 3-Amino-5-chlor-2,1-benzisothiazol, 3-Amino-5-brom-2,1-benzisothiazol, 3-Amino-4-chlor-2,1-benzisothiazol, 3-Amino-4-brom-2,1-benzisothiazol, 3-Amino-5,7-dichlor-2,1-benzisothiazol, 3-Amino-5,7-dibrom-2,1-benzisothiazol, 3-Amino-5-methyl-2,1-benzisothiazol, 3-Amino-5-nitro-2,1-benzisothiazol, 3-Amino-5-trifluormethyl-2,1-benzisothiazol, 3-Amino-5-acetylamino-2,1-benzisothiazol, 3-Amino-5-nitro-7-brom-2,1-benzisothiazol, 3-Amino-5-methylsulfonyl-2,1-benzisothiazol, 3-Amino-5-methoxy-2,1-benzisothiazol, Aminobenzol, 1-Amino-2-, -3- oder -4-methylbenzol, 1-Amino-2-, -3-oder -4-methoxybenzol, 1-Amino-2-, -3- oder -4-chlor-benzol, 1-Amino-2,5-dichlorbenzol, 1-Amino-2,5-dimethylbenzol, 1-Amino-3-methyl-6-methoxybenzol, 1-Amino-2-methoxy-4-nitrobenzol, 1-Aminobiphenyl, 1-Aminobenzol-2-, -3-oder -4-carbonsäure, 2-Aminodiphenyläther, 1-Aminobenzol-2-, -3- oder -4-sulfonsäureamid, -N-methylamid, -N-äthylamid, -N,N-dimethylamid-, -N,N-diäthylamid oder -N-Methyl-N-cyclohexylamid, 1-Amino-2-phenoxysulfonylbenzol, 1-Amino-2-(2′-chlorphenoxysulfonyl)benzol, 1-Amino-4-methylsulfonylbenzol, 1-Amino-4-äthylsulfonylbenzol, 1-Amino-2-chlor-4-methylsulfonylbenzol, 1-Amino-2,5-dichlor-4-sulfamoylbenzol, 1-Amino-4-phenylazobenzol, 1-Amino-2,5-dimethoxy-4-N-phenylsulfamoylbenzol, 1-Amino-2-(4′-chlorphenylsulfonyl)-5-äthylsulfonylbenzol, 1-Amino-2-trifluormethylbenzol, 1-Amino-2,5-dichlor-4-N,N-dimethylsulfamoylbenzol, 1-Amino-2-phenylsulfonylbenzol, 1-Amino-2-methoxy-5-chlorbenzol, 1-Amino-2,4,5-trichlorbenzol, 1-Amino-2,4-di(2′methylphenoxy)-benzol, 1-Amino-2-(4′-methylphenylsulfonyl)-benzol, 1-Amino-2-(4′-methylphenyl)sulfonyl-5-sulfamoylbenzol, 2-Amino-5-sulfamoylnaphthalin, 1-Amino-5-sulfamoylnaphthalin, 2-Amino-3-methoxycarbonyl-7-oxo-4,5,6,7-tetrahydrobenzo[b]thiophen, 2-Amino-3-äthoxycarbonyl-7-oxo-4,5,6,7-tetrahydrobenzo[b]thiophen, 2-Amino-3-methoxycarbonyl-6-methyl-7-oxo-4,5,6,7-tetrahydrobenzo[b]thiophen, 2-Amino-3-äthoxycarbonyl-6-methyl-7-oxo-4,5,6,7-tetrahydrobenzo[b]thiophen, 2-Amino-3-cyan-5,5-dimethyl-7-oxo-4,5,6,7-tetrahydrobenzo[b]thiophen, 2-Methoxycarbonyl-3-amino-4,5,6,7-tetrahydrobenzo[b]thiophen, 2-Aethoxycarbonyl-3-amino-4,5,6,7-tetrahydrobenzo[b]thiophen.

Die Diazokomponenten der Formel (3) sind an sich bekannt oder können in Analogie zu bekannten Verbindungen hergestellt werden.

Die Amine der Formel (3) und die Kupplungskomponenten der Formel (4) können in Aminogruppen überführbare Rest, wie, z.B. die Acetylamino- und die Nitrogruppe, enthalten. Beispielsweise kann eine Acetylaminogruppe durch Verseifen und eine Nitrogruppe durch Reduktion in eine Aminogruppe überführt werden, vorteilhafterweise im Anschluss an die Herstellung der Farbstoffe der Formel (1).

Einen weiteren Gegenstand der Erfindung stellen die Verbindungen der Formel (4) dar, insbesondere die Verbindungen der Formel (4) mit den vorgenannten besonders bevorzugten Resten sowie die Kombination der besonders bevorzugten Reste.

Die Verbindungen der Formel (4) werden z.B. erhalten, indem man eine Verbindung der Formel

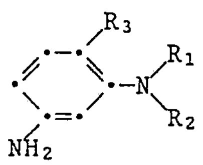 (6)

worin $R_1$, $R_2$ und $R_3$ die unter Formel (4) angegebenen Bedeutungen haben, mit einer den Rest der Formel

$-X-(CH_2)_n-Hal$ (7)

einführenden Verbindung, worin X und n die unter Formel (4) angegebenen Bedeutungen haben und Hal Halogen ist, umsetzt und anschliessend das Halogenatom gegen eine $-SO_3M$-Gruppe, wobei M die unter Formel (4) angegebene Bedeutung hat, austauscht.

Die Umsetzung der Verbindung der Formel (4) mit einer den Rest der Formel (7) einführenden Verbindung erfolgt z.B. in organischen Lösungsmitteln, wie z.B. Tetrahydrofuran, Dioxan, Toluol oder Benzol, in Gegenwart einer Base wie z.B. Natriumacetat bei einer Temperatur zwischen 0 und 50°C.

Der Austausch des Halogenatoms gegen eine $-SO_3M$-Gruppe erfolgt nach an sich bekannten Methoden, z.B. durch Umsetzung des erhaltenen Reaktionsprodukts mit einer Verbindung der Formel $M_2SO_3$ bzw. $MeSO_3$, worin M die unter Formel (1) angegebene Bedeutung hat und Me ein zweiwertiges Kation ist, bei einem pH-Wert von 5 bis 11, insbesondere 5 bis 9, und einer Temperatur zwischen 70 und 130°C, insbesondere 70 bis 100°C.

Als Verbindungen der Formel $MeSO_3$ kommen z.B. die Erdalkalisalze wie $CaSO_3$, $MgSO_3$ oder $BaSO_3$ in Betracht.

Die Verbindung der Formel (4) kann entweder durch Ausfällung aus wässriger Lösung mit Hilfe von Salzen wie z.B. NaCl oder durch Eindampfen der Reaktionsmischung erhalten werden.

Als Verbindungen der Formel (6) seien genannt: 3-N,N-Diäthylaminoanilin, 3-N,N-Diäthylmaino-4-methoxyanilin.

Als den Rest der Formel (7) einführende Verbindungen seien genannt: Chloracetylchlorid, 3-Chlorpropionsäurechlorid.

Bevorzugte Ausführungsformen des erfindungsgemässen Verfahrens zur Herstellung der Verbindungen der Formel (4) sind dadurch gekennzeichnet, dass man

- eine Verbindung der Formel (6) verwendet, worin $R_1$ und $R_2$ unabhängig voneinander $C_1$-$C_4$-Alkyl oder Benzyl ist;
- eine Verbindung der Formel (6) verwendet, worin $R_3$ Wasserstoff, $C_1$-$C_4$-Alkyl, $C_1$-$C_4$-Alkoxy oder Halogen, insbesondere Chlor, ist;
- eine Verbindung der Formel (7) verwendet, worin X -CO- ist;
- eine Verbindung der Formel (7) verwendet, worin n die Zahl 1 oder 2 ist;
- eine Verbindung der Formel (7) verwendet, worin Hal Chlor ist;
- der Austausch des Halogenatoms gegen eine $-SO_3M$-Gruppe bei einem pH-Wert von 5 bis 11, insbesondere

bei einem pH-Wert von 5 bis 9, erfolgt;
- der Austausch des Halogenatoms gegen eine -$SO_3M$-Gruppe bei einer Temperatur von 70 bis 130°C, insbesondere 70 bis 100°C, erfolgt;
- der Austausch des Halogenatoms gegen eine -$SO_3M$-Gruppe unter Druck erfolgt, insbesondere einem Druck von 1 bis 6 bar, vorzugsweise 1 bis 3 bar;
- der Austausch des Halogenatoms gegen eine -$SO_3M$-Gruppe durch Umsetzung mit einer Verbindung der Formel $M_2SO_3$ oder $MeSO_3$ erfolgt, worin M die unter Formel (1) angegebene Bedeutung hat, insbesondere worin M Alkali, vorzugsweise Natrium, ist, und Me ein zweiwertiges Kation, insbesondere Calcium oder Magnesium, ist.

Eine besonders bevorzugte Ausführungsform des erfindungsgemässen Verfahrens zur Herstellung der Verbindungen der Formel (4) ist dadurch gekennzeichnet, dass man eine Verbindung (7) verwendet, worin n die Zahl 1 oder 2 ist, und den Austausch des Halogenatoms gegen eine -$SO_3M$-Gruppe bei einem pH-Wert von 5 bis 11 und einer Temperatur von 70 bis 130°C durch Umsetzung mit einer Verbindung der Formel $M_2SO_3$ oder $MeSO_3$ vornimmt, worin M die unter Formel (1) angegebene Bedeutung hat, insbesondere worin M Alkali, vorzugsweise Natrium, ist, und Me ein zweiwertiges Kation ist.

Eine ganz besonders bevorzugte Ausführungsform des erfindungsgemässen Verfahrens zur Herstellung der Verbindungen der Formel (4) ist dadurch gekennzeichnet, dass man eine Verbindung der Formel (6) verwendet, worin $R_1$ und $R_2$ unabhängig voneinander $C_1$-$C_4$-Alkyl oder Benzyl und $R_3$ Wasserstoff, $C_1$-$C_4$-Alkyl, $C_1$-$C_4$-Alkoxy oder Halogen, insbesondere Wasserstoff, $C_1$-$C_4$-Alkyl oder $C_1$-$C_4$-Alkoxy, ist, und eine Verbindung der Formel (7) verwendet, worin X -CO-, n die Zahl 1 oder 2 und Hal Chlor ist.

Die Farbstoffe der Formel (1), welche eine wasserlöslichmachende Sulfo-Gruppe enthalten, liegen entweder in der Form ihrer freien Säure oder vorzugsweise als deren Salze vor.

Als Salze kommen beispielsweise die Alkali-, Erdalkali- oder Ammoniumsalze oder die Salze eines organischen Amins in Betracht.

Als Beispiel seien die Natrium-, Lithium-, Kalium- oder Ammoniumsalze oder das Salz des Triäthanolamins genannt.

Die erfindungsgemässen Azofarbstoffe der Formel (1) eignen sich nach an sich bekannten Methoden zum Färben und Bedrucken, insbesondere von stickstoffhaltigen oder hydroxygruppenhaltigen Fasermaterialien, wie z.B. textilen Fasermaterialien aus Cellulose, Seide und insbesondere Wolle und synthetischen Polyamiden. Man erhält egale Färbungen in orangen, roten, blauen und grauen Tönen mit guten Allgemeinechtheiten, insbesondere guter Reib-, Nass-, Nassreib- und Lichtechtheit sowie guter Formaldehydbeständigkeit. Ferner sind die erfindungsgemässen Farbstoffe sehr gut mit anderen Farbstoffen kombinierbar. Das oben genannte Textilmaterial kann in den verschiedensten Verarbeitungsformen vorliegen, wie z.B. als Faser, Garn, Gewebe oder Gewirke.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

Beispiel 1:

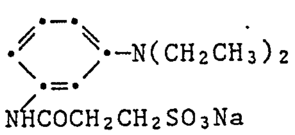
(101)

32,8 Teile 3-Diäthylaminoanilin und 100 Teile Tetrahydrofuran werden bei ca. 20° unter Rühren vorgelegt. Nach dem Eintragen von 32,8 Teilen wasserfreiem Natriumacetat werden 27,9 Teile 3-Chlorpropionsäurechlorid innerhalb 90 Minuten so zugetropft, dass die Innentemperatur 30° nicht übersteigt. Man rührt noch 30 Minuten nach, gibt 70 Teile Wasser hinzu, und trennt danach die organische Phase im Scheidetrichter ab. Die organische Phase wird über Natriumsulfat kurz getrocknet und danach am Rotationsverdampfer eingeengt. Man erhält 50 Teile einer leicht bräunlichen Flüssigkeit, die in dieser Form für den nächsten Syntheseschnitt verwendet werden kann. Die erhaltene Verbindung entspricht der Formel

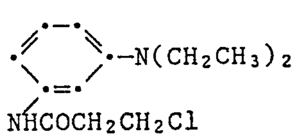
(102)

50 Teile der Verbindung der Formel (102) werden mit 150 Teilen Wasser 10 Minuten verrührt. Man stellt bei 20° einen pH-Wert von 7 ein, gibt 27,7 Teile Natriumsulfit hinzu und rührt 12 Stunden bei 90°-95°. Danach wird das Wasser am Rotationsverdampfer entfernt und der Rückstand bei ca. 20° in 200 Teilen Aceton eingerührt. Anschliessend wird kurz gerührt, abfiltriert, mit wenig Aceton nachgewaschen und im Vakuumtrockenschrank bei 50° getrocknet. Man erhält 76 Teile eines farblosen Pulvers. Die erhaltene Verbindung entspricht der

Formel (101).

Wenn man wie angegeben verfährt, jedoch anstelle der 32,8 Teile 3-Diäthylaminoanilin eine äquimolare Menge eines der in der folgenden Tabelle 1 in Spalte 2 angegebenen Amine verwendet und anstelle der 27,9 Teile 3-Chlorpropionsäurechlorid eine äquimolare Menge eines der in der folgenden Tabelle 1 in Spalte 3 angegebenen Acylierungsmittels verwendet, so erhält man nach Umsetzung mit $Na_2SO_3$ bei Reaktionszeiten zwischen 2 und 16 Stunden und Temperaturen zwischen 80 und 95° die in Spalte 4 angegebenen Produkte.

Tabelle 1

| Beispiel | Amin | Acylierungsmittel | Produkt |
|---|---|---|---|
| 2 | 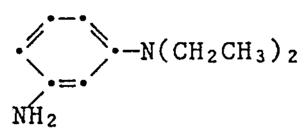 | 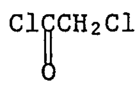 | 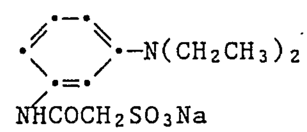 (103) |
| 3 | 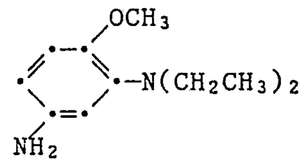 | 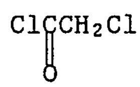 | 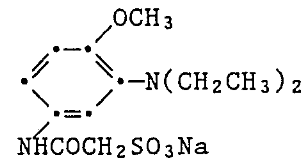 (104) |
| 4 | 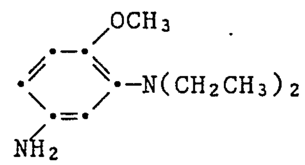 | 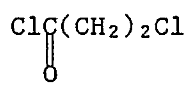 | 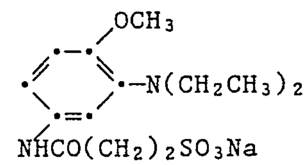 (105) |
| 5 | 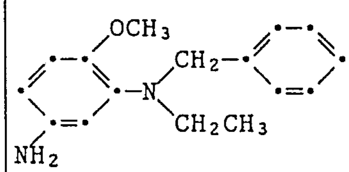 | 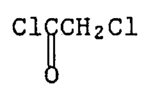 | 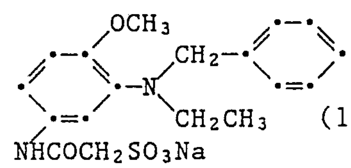 (106) |

Beispiel 6:

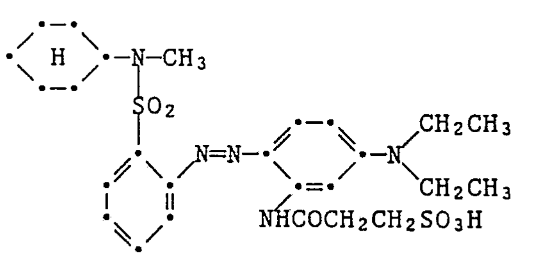

(107)

Bei ca. 10° werden 12 Teile Isopropanol und 12 Teile Wasser vorgelegt. Nach Abkühlen auf 5° werden 2,03 Teile Anilin-o-sulfonsäure-N-methyl-N-cyclohexylamid und 4,5 Teile HCl (32 %) hintereinander zugegeben. Danach wird bei einer Innentemperatur von 0 bis 2° mit 0,55 Teilen Natriumnitrit in 3 Teilen Wasser diazotiert und 3 Stunden bei 2 bis 3° nachgerührt. Danach gibt man 1 Teile Sulfaminsäure hinzu, rührt 2 Minuten nach und streut 3,9 Teile N-β-Sulfopropionyl-amido-3-N,N-diethylaminobenzol in ca. 1 Minute ein. Innerhalb von 15 Minuten gibt man in 3 Portionen 4 Teile Natriumacetat zu und rührt 3 Stunden bei 0 bis 5° nach. Dann wird eine Lösung bestehend aus 4 Teilen Natriumacetat, 2 Teilen Natriumcarbonat und 20 Teilen Wasser innerhalb von 30 Minuten zugetropft und anschliessend abgesaugt. Die Trocknung erfolgt im Vakuum bei 50°. Man erhält 2 Teile einer roten Substanz, die in Form der freien Säure der Formel (107) entspricht und die Polyamid in orangeroten Tönen färbt.

Wenn man wie angegeben verfährt, jedoch als Diazokomponente eine äquimolare Menge eines der in der folgenden Tabelle 2 in Spalte 2 angegebenen Amine verwendet, und als Kupplungskomponente eine

äquimolare Menge eine der in der folgenden Tabelle 2 in Spalte 3 in Form der freien Säuren angegebenen Kupplungskomponenten verwendet, so erhält man Farbstoffe, die synthetisches Polyamid in dem in Spalte 4 der folgenden Tabelle 2 angegebenen Ton färben.

Tabelle 2

| Bei-spiel | Amin | Kupplungs-komponente | Nuance auf Polyamid |
|---|---|---|---|
| 7 | 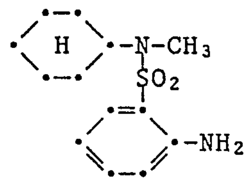 | 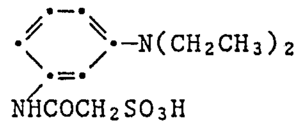 | orange |
| 8 | 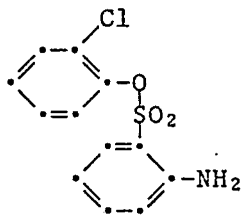 | 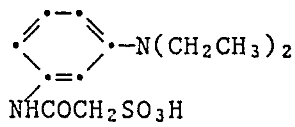 | gelbstichig rot |
| 9 | 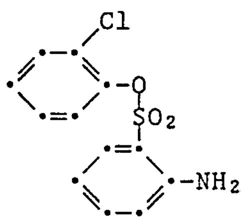 | 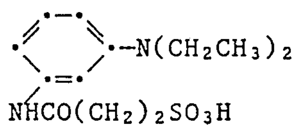 | gelbstichig rot |
| 10 | 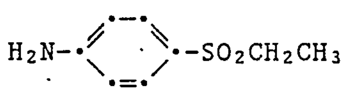 | 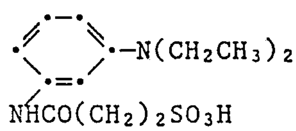 | orange |
| 11 | 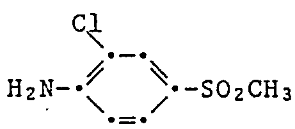 | 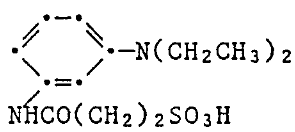 | gelbstichig rot |
| 12 | 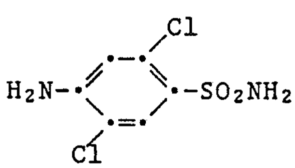 | 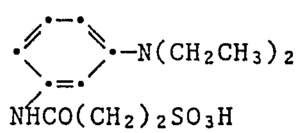 | gelbstichig rot |
| 13 | 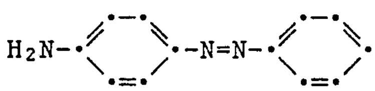 | 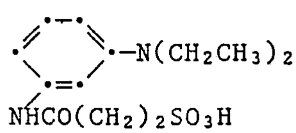 | rot |
| 14 | 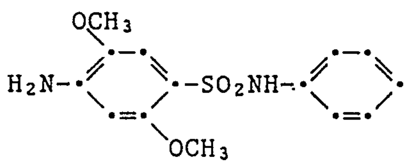 | 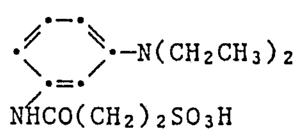 | gelbstichig rot |

Tabelle 2 (Fortsetzung)

| Beispiel | Amin | Kupplungskomponente | Nuance auf Polyamid |
|---|---|---|---|
| 15 | 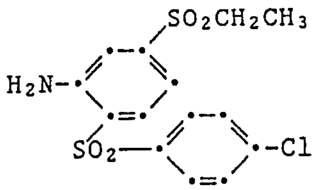 | 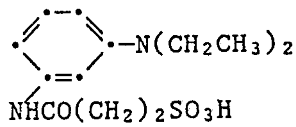 | rot |
| 16 | 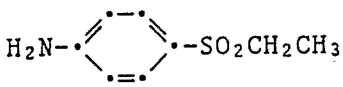 | 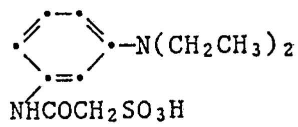 | gelbstichig rot |
| 17 | 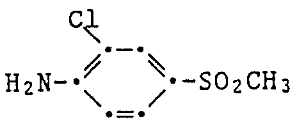 | 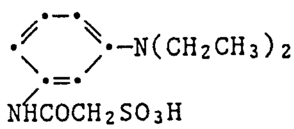 | rot |
| 18 | 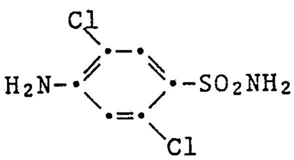 | 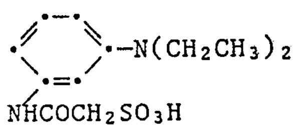 | rot |
| 19 | 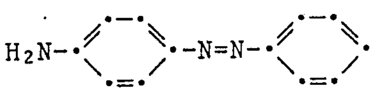 | 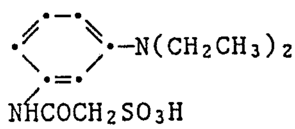 | rot |
| 20 | 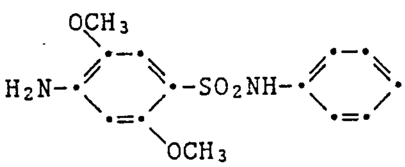 | 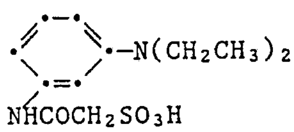 | rot |
| 21 | 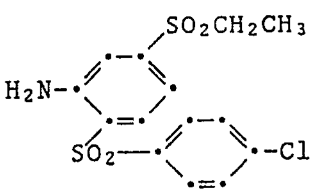 | 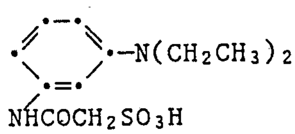 | rot |
| 22 | 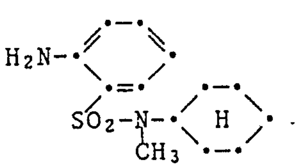 | 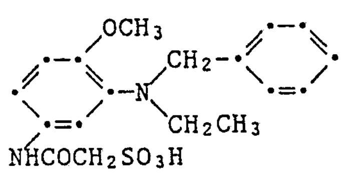 | orange |

Tabelle 2 (Fortsetzung)

| Bei-spiel | Amin | Kupplungs-komponente | Nuance auf Polyamid |
|---|---|---|---|
| 23 | 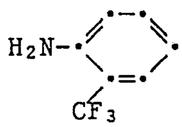 | 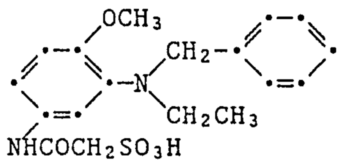 | orange |
| 24 | 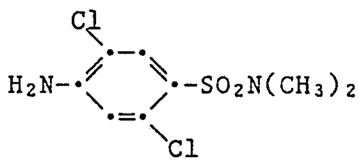 | 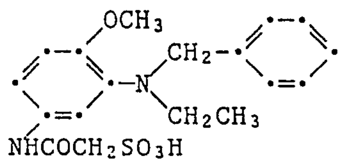 | blaustichig rot |
| 25 | 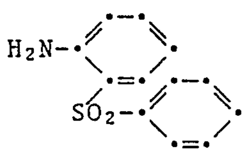 | 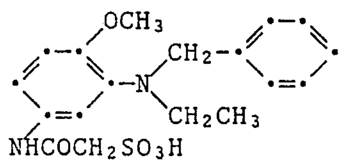 | gelbstichig rot |
| 26 | 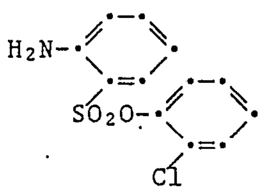 | 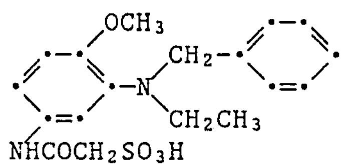 | gelbstichig rot |
| 27 | 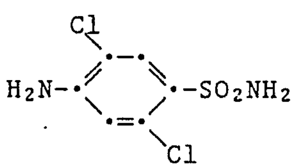 | 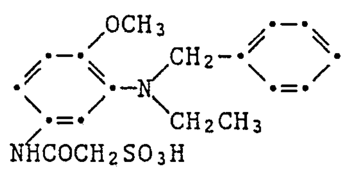 | blaustichig rot |
| 28 | 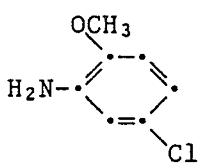 | 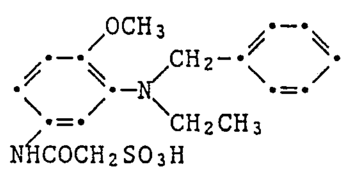 | orange |
| 29 | 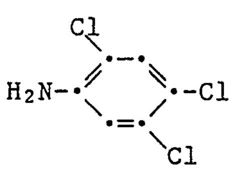 | 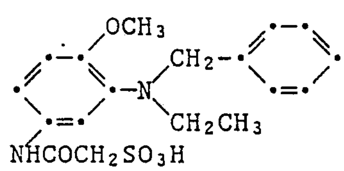 | gelbstichig rot |
| 30 | 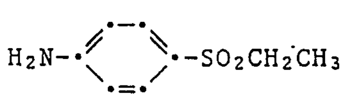 | 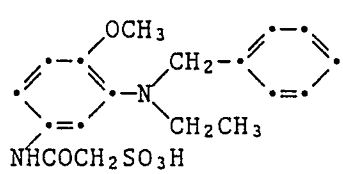 | gelbstichig rot |

Tabelle 2 (Fortsetzung)

| Beispiel | Amin | Kupplungskomponente | Nuance auf Polyamid |
|---|---|---|---|
| 31 | 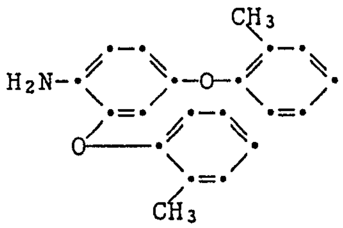 | 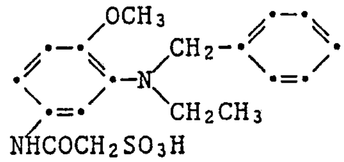 | orange |
| 32 | 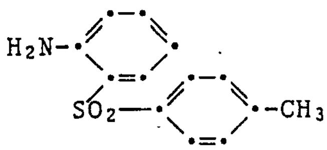 | 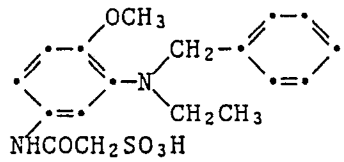 | gelbstichig rot |
| 33 | 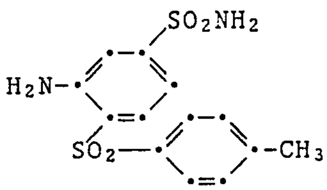 | 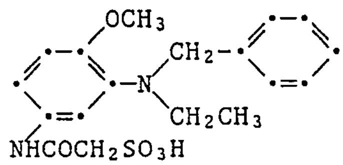 | rot |
| 34 | 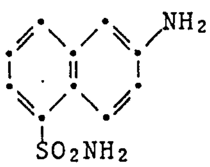 | 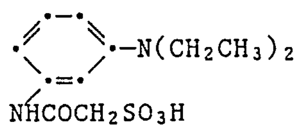 | orange |
| 35 | 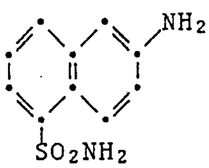 | 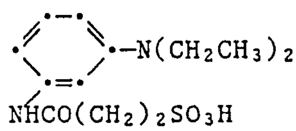 | orange |
| 36 | 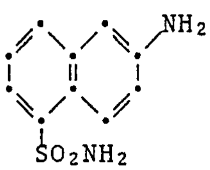 | 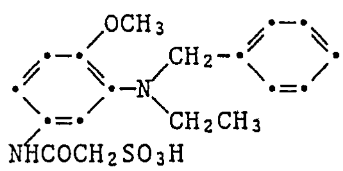 | gelbstichig rot |

Beispiel 37:

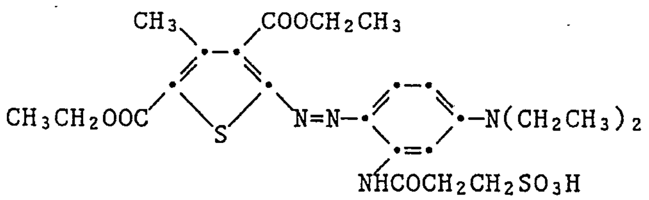

(111)

Bei 10° werden 19 Teile Eisessig und 9 Teile Salzsäure (32 %) unter Rühren vorgelegt. Danach werden 1,98 Teile 2-Amino-3,5-dicarboäthoxy-4-methyl-thiopen eingetragen, und es wird auf 0° gekühlt. Anschliessend wird mit 0,55 Teilen $NaNO_2$ in 3 Teilen Wasser bei 0 bis 2° diazotiert und 15 Minuten nachgerührt. Der Nitritüberschuss wird mit 1 Teil Sulfaminsäure vernichtet und 8,9 Teile N-β-Sulfopropionyl-amido-3-N,N-diäthylaminobenzol in ca. 1 Minute eingestreut. Danach gibt man innerhalb von 15 Minuten 16 Teile Natriumacetat in 4 Portionen hinzu und rührt noch 30 Minuten bei 0 bis 2° nach. Danach tropft man innerhalb weiterer 30 Minuten eine Lösung bestehend aus 4 Teilen Natriumacetat, 2 Teilen Natriumcarbonat und 20 Teilen Wasser zu. Man filtriert den Farbstoff bei Raumtemperatur, wäscht mit 50 Teilen 10 %-iger wässriger NaCl-Lösung nach und trocknet im Vakuumschrank bei 50°. Man erhält 3,5 Teile eines dunklen Pulvers, das synthetisches Polyamid in violetten Tönen färbt. Der Farbstoff entspricht in Form der freien Säure der Formel (111).

Wenn man wie angegeben verfährt, jedoch als Diazokomponente eine äquimolare Menge eines der in der folgenden Tabelle 3 in Spalte 2 angegebenen Amine verwendet, und als Kupplungskomponente eine der in der folgenden Tabelle 3 in Spalte 3 in Form der freien Säuren angegebenen Kupplungskomponenten verwendet, so erhält man Farbstoffe, die synthetisches Polyamid in dem in Spalte 4 der folgenden Tabelle 3 angegebenen Ton färben.

Tabelle 3

| Beispiel | Amin | Kupplungskomponente | Nuance auf Polyamid |
|---|---|---|---|
| 38 | 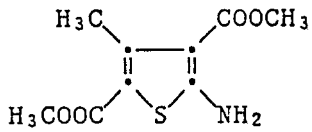 | 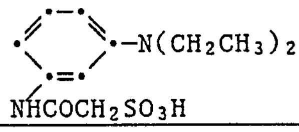 | violett |
| 39 | 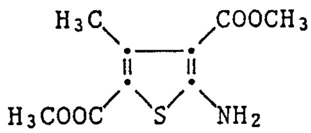 | 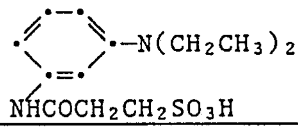 | violett |
| 40 | 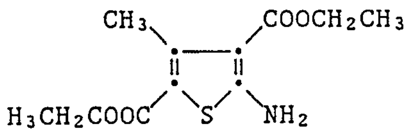 | 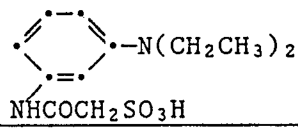 | violett |
| 41 | 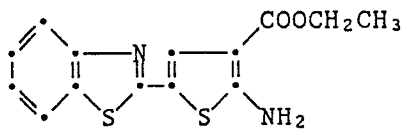 | 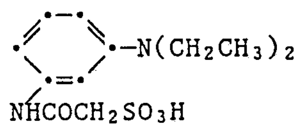 | rotstichig blau |
| 42 | 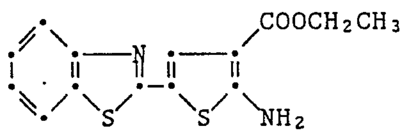 | 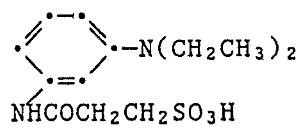 | rotstichig blau |
| 43 | 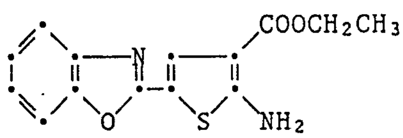 | 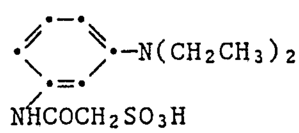 | rotstichig blau |
| 44 | 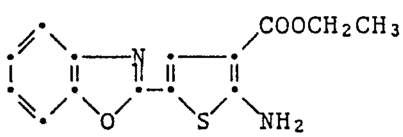 | 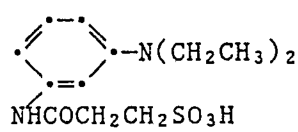 | rotstichig blau |
| 45 | 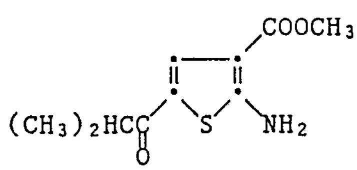 | 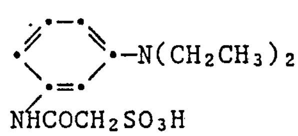 | rotstichig blau |
| 46 | 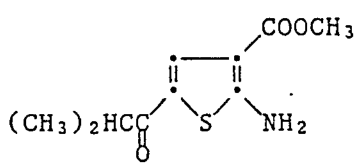 | 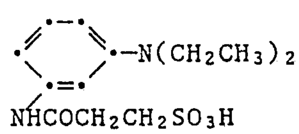 | rotstichig blau |

Tabelle 3 (Fortsetzung)

| Beispiel | Amin | Kupplungskomponente | Nuance auf Polyamid |
|---|---|---|---|
| 47 | 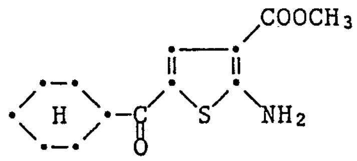 | 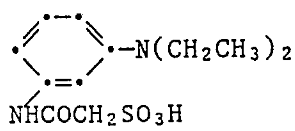 | rotstichig blau |
| 48 | 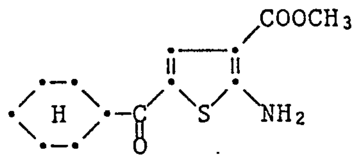 | 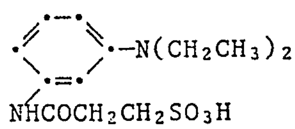 | rotstichig blau |
| 49 | 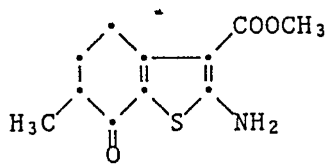 | 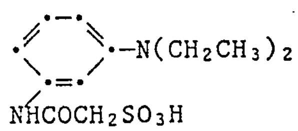 | rotstichig blau |
| 50 | 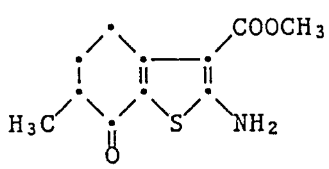 | 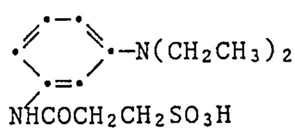 | rotstichig blau |
| 51 | 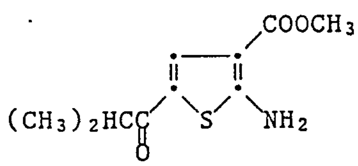 | 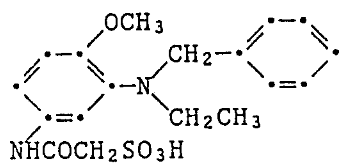 | blau |
| 52 | 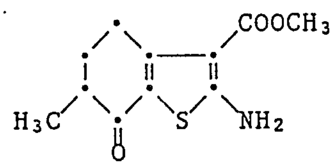 | 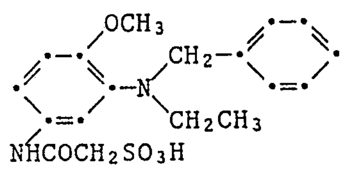 | blau |
| 53 | 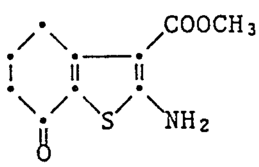 | 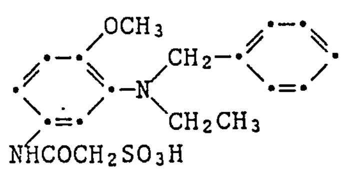 | blau |
| 54 | 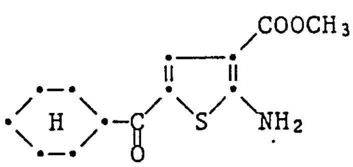 | 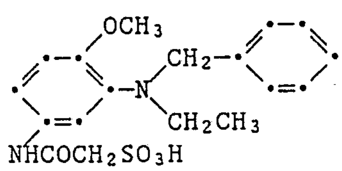 | blau |

Tabelle 3 (Fortsetzung)

| Beispiel | Amin | Kupplungskomponente | Nuance auf Polyamid |
|---|---|---|---|
| 55 | 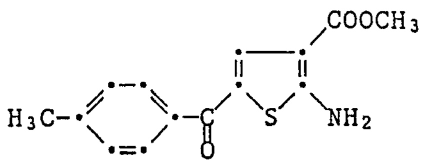 | 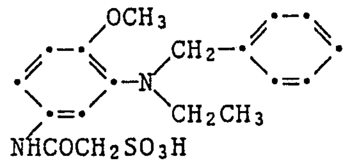 | blau |
| 56 | 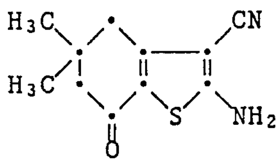 | 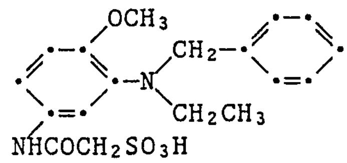 | grünstichig blau |
| 57 | 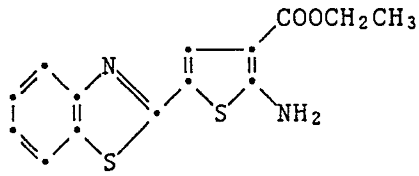 | 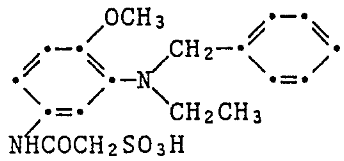 | blau |
| 58 | 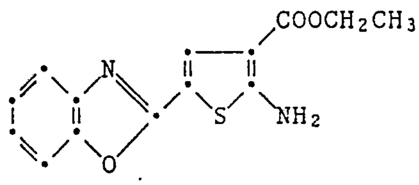 | 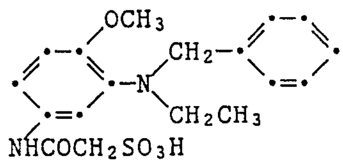 | blau |
| 59 | 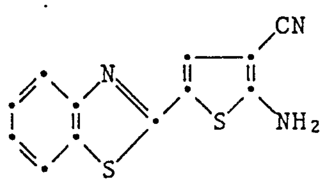 | 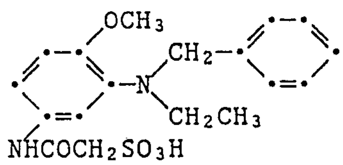 | grünstichig blau |
| 60 | 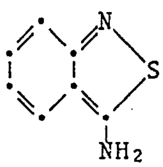 | 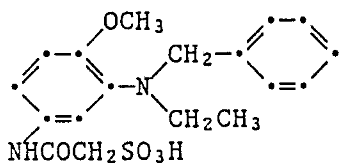 | blau |
| 61 | 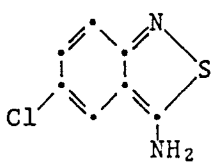 | 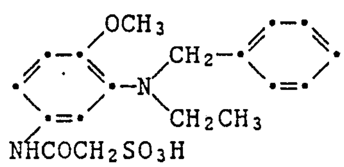 | blau |
| 62 | 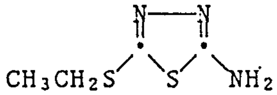 | 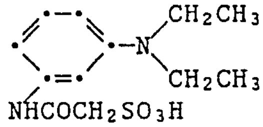 | rot |

Tabelle 3 (Fortsetzung)

| Bei-spiel | Amin | Kupplungs-komponente | Nuance auf Polyamid |
|---|---|---|---|
| 63 | 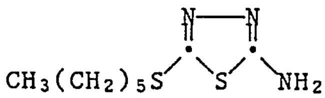 | 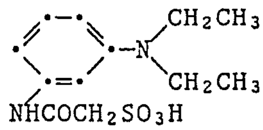 | rot |
| 64 | 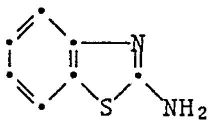 | 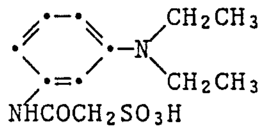 | rot |
| 65 | 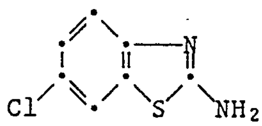 | 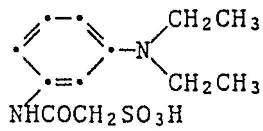 | rubin |
| 66 | 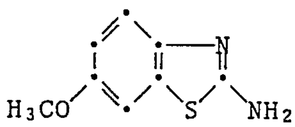 | 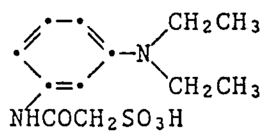 | blaustichig rot |
| 67 | 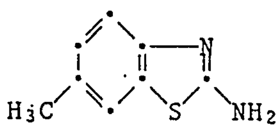 | 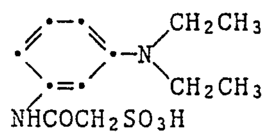 | rot |
| 68 | 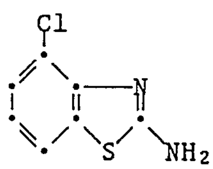 | 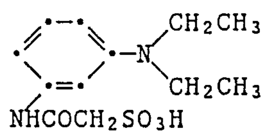 | rubin |
| 69 | 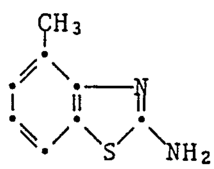 | 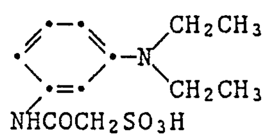 | rot |
| 70 | 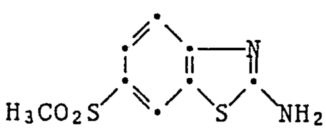 | 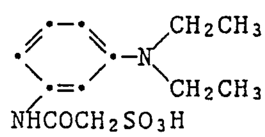 | rot |

Tabelle 3 (Fortsetzung)

| Beispiel | Amin | Kupplungskomponente | Nuance auf Polyamid |
|---|---|---|---|
| 71 | 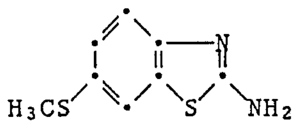 | 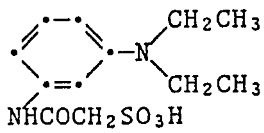 | rot |
| 72 | 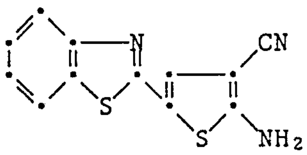 | 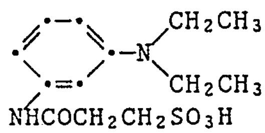 | blau |
| 73 | 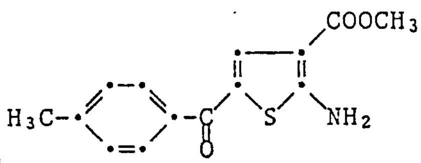 | 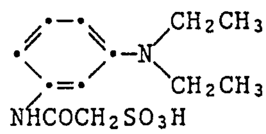 | stark rotstichig blau |
| 74 | 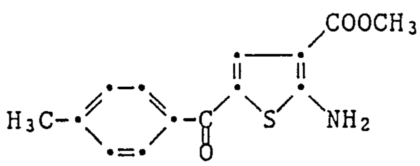 | 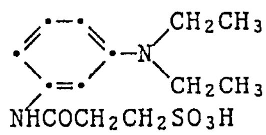 | stark rotstichig blau |
| 75 | 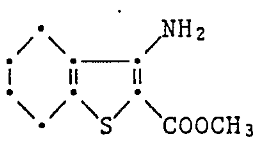 | 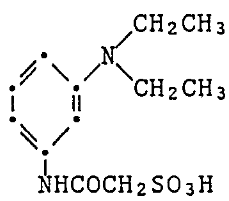 | gelbstichig rot |
| 76 | 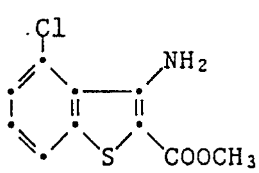 | 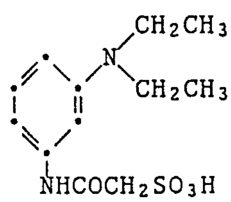 | orange |
| 77 | 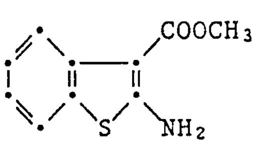 | 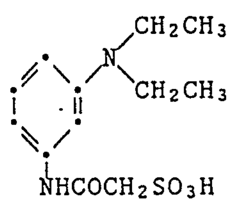 | blaustichig rot |
| 78 | 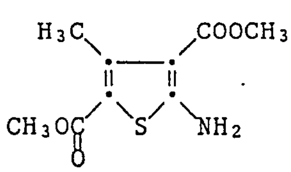 | 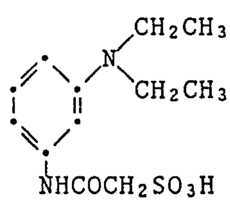 | violett |

Tabelle 3 (Fortsetzung)

| Bei-spiel | Amin | Kupplungs-komponente | Nuance auf Polyamid |
|---|---|---|---|
| 79 | 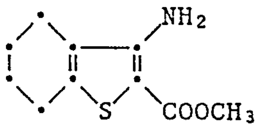 | 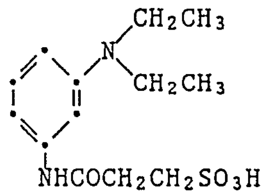 | gelbstichig rot |
| 80 | 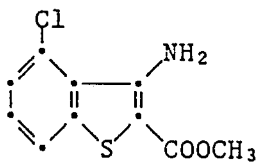 | 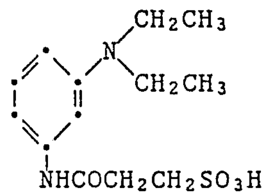 | orange |
| 81 | 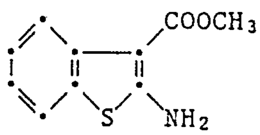 | 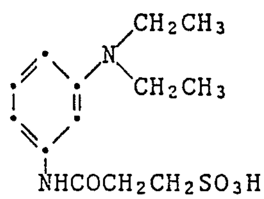 | blaustichig rot |
| 82 | 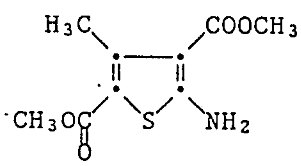 | 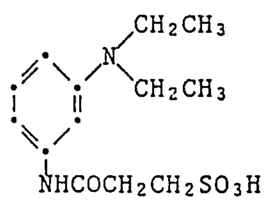 | violett |
| 83 | 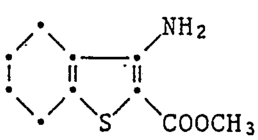 | 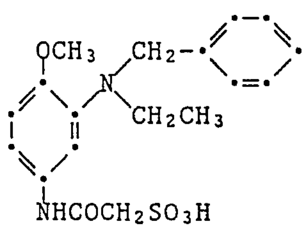 | gelbstichig rot |
| 84 | 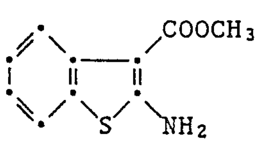 | 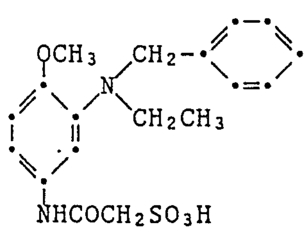 | stark blaustichig rot |
| 85 | 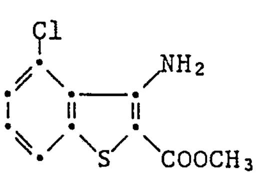 | 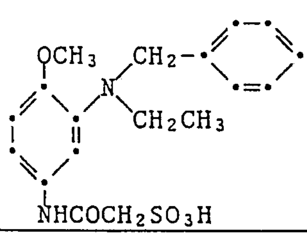 | gelbstichig rot |

Tabelle 3 (Fortsetzung)

| Bei-spiel | Amin | Kupplungs-komponente | Nuance auf Polyamid |
|---|---|---|---|
| 86 | 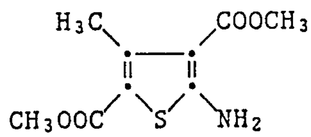 | 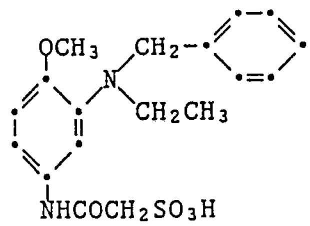 | violett |
| 87 | 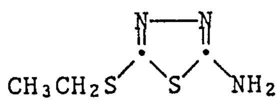 | 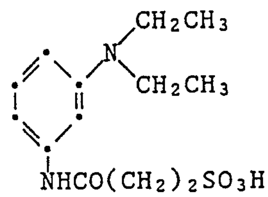 | rot |
| 88 | 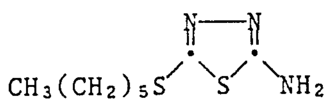 | 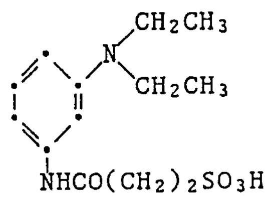 | rot |
| 89 | 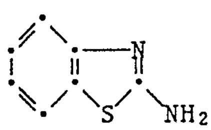 | 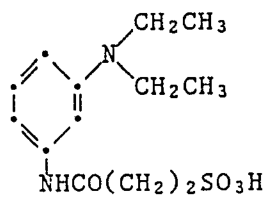 | rot |
| 90 | 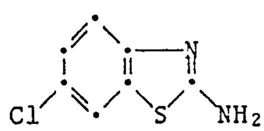 | 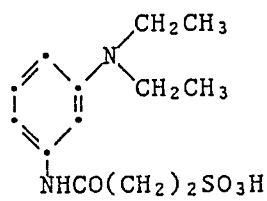 | rubin |
| 91 | 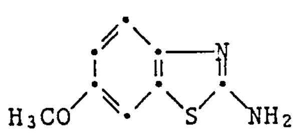 | 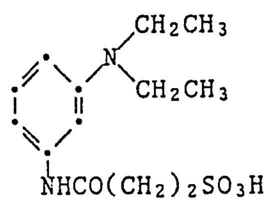 | blaustichig rot |
| 92 | 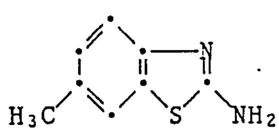 | 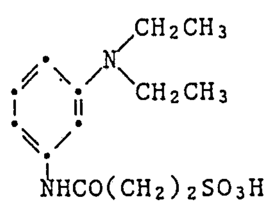 | rot |

Tabelle 3 (Fortsetzung)

| Beispiel | Amin | Kupplungskomponente | Nuance auf Polyamid |
|---|---|---|---|
| 93 | 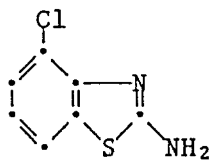 | 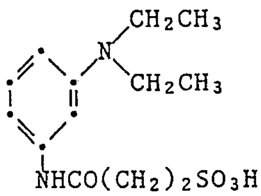 | rubin |
| 94 | 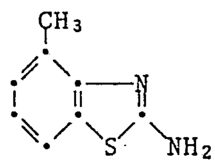 | 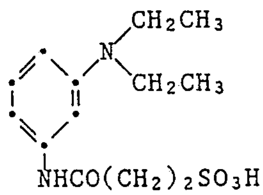 | rot |
| 95 | 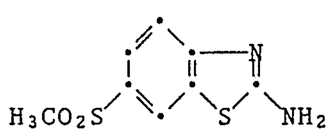 | 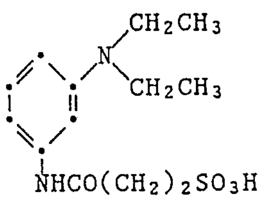 | rot |
| 96 | 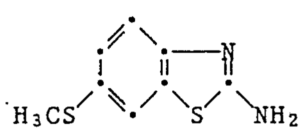 | 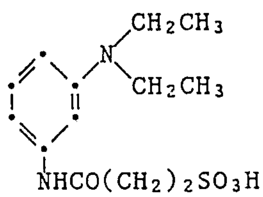 | rot |

Färbevorschrift I

Man färbt 10 Teile Polyamid-6.6-Fasermaterial (Helancatricot) in 500 Teilen einer wässrigen Flotte, die 2 g/l Ammonacetat enthält und mit Essigsäure auf pH 5 gestellt wird. Der Anteil des Farbstoffes gemäss Beispiel 6 beträgt 0,7 % bezogen auf das Fasergewicht. Die Färbedauer bei einer Temperatur von 98° beträgt 30 bis 90 Minuten. Das gefärbte Fasermaterial wird anschliessend herausgenommen und wie üblich gespült und getrocknet.

Man erhält ein orange gefärbtes Polyamid-6.6-Fasermaterial, das eine reine Nuance und gute Gesamtechtheiten aufweist.

Färbevorschrift II

Man färbt 10 Teile Polyamid-6.6-Fasermaterial (Helancatrikot) in 500 Teilen einer wässrigen Flotte, die 1 g/l Mononatriumphosphat enthält und mit Dinatriumphosphat auf pH 6 gestellt wird. Der Anteil des Farbstoffes gemäss Beispiel 40 beträgt 1 %, bezogen auf das Fasergewicht. Die Färbe dauer bei einer Temperatur von 98° beträgt 30 bis 90 Minuten. Das gefärbte Fasermaterial wird anschliessend herausgenommen und wie üblich gespült und getrocknet.

Man erhält ein violett gefärbtes Polyamid-6.6-Fasermaterial, das eine reine Nuance und gute Gesamtechtheiten aufweist.

Färbevorschrift III

Man färbt 10 Teile Wollstück in 500 Teilen einer wässrigen Flotte. Bezogen auf das Fasergewicht betragen die Anteile an Farbstoff 0,45 % gemäss Beispiel 39, an Glaubersalz kalz. 5 % und 80%-iger Essigsäure 2 %. Die Färbedauer bei einer Temperatur von 98° beträgt 30-60 Minuten. Das violet gefärbte, wie üblich gespülte und getrocknete Wollstück weist sehr gute Allgemeinechtheiten auf.

**Patentansprüche**

1. Azofarbstoffe der Formel

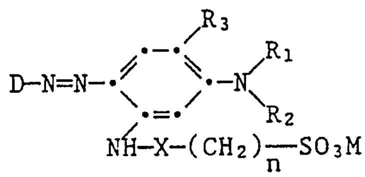

(1)

worin D eine Diazokomponente, $R_1$ und $R_2$ unabhängig voneinander je ein gegebenenfalls substituierter $C_1$-$C_{10}$-Alkyl-, $C_5$-$C_7$-Cycloalkyl-, Phenyl-oder Naphthyl-Rest, oder $R_1$ und $R_2$ zusammen mit dem sie verbindenden Stickstoffatom ein gegebenenfalls durch Heteroatome substituierter 5-, 6-oder 7-gliedriger Ring, $R_3$ Wasserstoff, Halogen oder ein gegebenenfalls substituierter $C_1$-$C_{10}$-Alkyl-, $C_1$-$C_{10}$-Alkoxy- oder Phenoxy-Rest, X -CO-oder -$SO_2$-, n die Zahl 1, 2, 3, 4, 5 oder 6 und M ein Kation ist.

2. Azofarbstoffe gemäss Anspruch 1, worin D eine Diazokomponente der Benzol- oder Naphthalin-Reihe oder der heterocyclischen Reihe ist.

3. Azofarbstoffe gemäss einem der Ansprüche 1 und 2, worin D Thienyl, Thiazolyl, 7-Oxotetrahydrobenzo[b]thiophenyl, Isothiazolyl, 1,2,4-Thiadiazolyl, 1,3,4-Thiadiazolyl, Benzthiazolyl, Benzisothiazolyl, Pyrazolyl, Imidazolyl, 1,2,3-Triazolyl, 1,2,4-Triazolyl, Thiophenyl, Benzthiophenyl, Tetrahydrobenzo[b]thiophenyl, Pyridinyl, Indazolyl, Phenyl oder Naphthyl ist, wobei jeder der genannten Reste weiter substituiert sein kann.

4. Azofarbstoffe gemäss einem der Ansprüche 1 bis 3, worin der Farbstoff der Formel (1) nur eine einzige Sulfonsäuregruppe enthält.

5. Azofarbstoffe gemäss einem der Ansprüche 1 bis 4, worin $R_1$ und $R_2$ unabhängig voneinander $C_1$-$C_4$-Alkyl oder Benzyl ist.

6. Azofarbstoffe gemäss einem der Ansprüche 1 bis 5, worin $R_3$ Wasserstoff, $C_1$-$C_4$-Alkyl, $C_1$-$C_4$-Alkoxy oder Chlor ist.

7. Azofarbstoffe gemäss einem der Ansprüche 1 bis 6, worin X -CO- ist.

8. Azofarbstoffe gemäss einem der Ansprüche 1 bis 7, worin n die Zahl 1 oder 2 ist.

9. Azofarbstoffe gemäss einem der Ansprüche 1 bis 8 der Formel

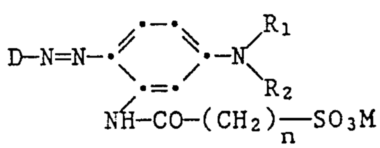

(2),

worin D durch N-Methyl-N-cyclohexylsulfamoyl, N-Aethyl-N-phenylsulfamoyl, N-Methyl-N-cycloheptylsulfamoyl, 2′-Chlorphenoxysulfonyl, Chlor, Sulfamoyl, Methoxy, N-Phenylsulfamoyl, N,N-Dimethylsulfamoyl, Phenylsulfonyl, p-Methylphenylsulfonyl, p-Chlorphenylsulfonyl, o-Methylphenoxy, Phenoxy, Phenylazo, Methylsulfonyl, Aethylsulfonyl, Trifluormethyl substituiertes Phenyl, 3,5-Diäthoxycarbonyl-4-methylthiophenyl, 3-Methoxycarbonyl-5-isobutyrylthiophenyl, 3-Methoxycarbonyl-5-cyclohexylcarbonylthiophenyl, 3-Methoxycarbonyl-5-(4′-methylbenzoyl)thiophenyl, 3-Aethoxycarbonyl-5-(benzthiazol-2′-yl)thiophenyl, 3-Aethoxycarbonyl-5-(benzoxazol-2′-yl)thiophenyl, 3-Cyan-5-(benzthiazol-2′-yl)-thiophenyl, 3,5-Dimethoxycarbonyl-4-methylthiophenyl, 7-Oxo-3-methoxycarbonyl-4,5,6,7-tetrahydrobenzo[b]thiophenyl, 7-Oxo-3-methoxy-6-methyl-4,5,6,7-tetrahydrobenzo[b]thiophenyl, 7-Oxo-3-cyan-5,5-dimethyl-4,5,6,7-tetrahydrobenzo[b]thiophenyl, 2-Methoxycarbonyl-4,5,6,7-tetrahydrobenzo[b]thiophenyl, 3-Methoxycarbonyl-4,5,6,7-tetrahydrobenzo[b]thiophenyl, 2-Methoxycarbonyl-4-chlorbenzo[b]thiophenyl, 3-Methoxycarbonylbenzo[b]-thiophenyl, Benzthiazolyl, 6-Chlorbenzthiazolyl, 6-Methoxybenzthiazolyl, 6-Methylbenzthiazolyl, 4-Chlorbenzthiazolyl, 4-Methylbenzthiazolyl, 6-Methylsulfonylbenzthiazolyl, 6-Methylthiobenzthiazolyl, Benzisothiazolyl, 5-Chlorbenzisothiazolyl, 5-Aethylthio-1,3,4-thiadiazolyl, 5-Hexylthio-1,3,4-thiadiazolyl, 5-Sulfamoylnaphthyl, $R_1$ Aethyl und $R_2$ Aethyl oder Benzyl, n die Zahl 1 oder 2 und M Wasserstoff, ein Alkalimetallkation, Ammonium oder $C_1$-$C_4$-Alkylammonium ist.

10. Verfahren zur Herstellung von Azofarbstoffen gemäss Anspruch 1, dadurch gekennzeichnet, dass man ein Amin der Formel

$D$-$NH_2$ (3)

diazotiert und auf eine Kupplungskomponente der Formel

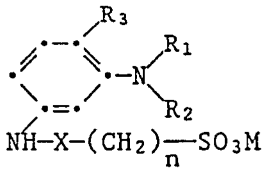

(4)

kuppelt, wobei D, $R_1$, $R_2$, $R_3$, X, M und n in den Formeln (3) und (4) die in Anspruch 1 angegebenen Bedeutungen haben.

11. Verwendung der Azofarbstoffe gemäss den Ansprüchen 1 bis 9 bzw. der gemäss Anspruch 10 erhaltenen Azofarbstoffe zum Färben und Bedrucken.

12. Verbindungen der Formel

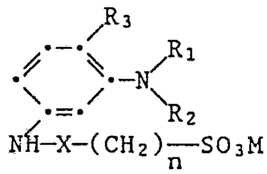

(4)

worin $R_1$ und $R_2$ unabhängig voneinander je ein gegebenenfalls substituierter $C_1$-$C_{10}$-Alkyl-, $C_5$-$C_7$-Cycloalkyl-, Phenyl- oder Naphthyl-Rest, oder $R_1$ und $R_2$ zusammen mit dem sie verbindenden Stickstoffatom ein gegebenenfalls durch Heteroatome substituierter 5-, 6- oder 7-gliedriger Ring, $R_3$ Wasserstoff, Halogen oder ein gegebenenfalls substituierter $C_1$-$C_{10}$-Alkyl, $C_1$-$C_{10}$-Alkoxy oder Phenoxy-Rest, X -CO- oder $-SO_2$, n die Zahl 1, 2, 3, 4, 5 oder 6 und M ein Kation ist.

13. Verbindungen gemäss Anspruch 12, dadurch gekennzeichnet, dass n die Zahl 1 oder 2 ist.

14. Verfahren zur Herstellung von Verbindungen gemäss Anspruch 12, dadurch gekennzeichnet, dass man eine Verbindung der Formel

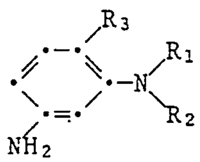

(6)

worin $R_1$, $R_2$ und $R_3$ die in Anspruch 12 angegebenen Bedeutungen haben, mit einer den Rest der Formel

$-X-(CH_2)_n-Hal$ (7)

einführenden Verbindung, worin X und n die in Anspruch 12 angegebenen Bedeutungen haben und Hal Halogen ist, umsetzt und anschliessend das Halogenatom gegen eine $-SO_3M$-Gruppe, wobei M die in Anspruch 12 angegebene Bedeutung hat, austauscht.

15. Verfahren gemäss Anspruch 14, dadurch gekennzeichnet, dass man eine Verbindung der Formel (7) verwendet, worin n die Zahl 1 oder 2 ist.

16. Verfahren gemäss einem der Ansprüche 14 und 15, dadurch gekennzeichnet, dass der Austausch des Halogenatoms gegen eine $-SO_3M$-Gruppe, worin M ein Kation ist, bei einem pH-Wert von 5 bis 11, insbesondere 5 bis 9, erfolgt.

17. Verfahren gemäss einem der Ansprüche 14 bis 16, dadurch gekennzeichnet, dass der Austausch des Halogenatoms gegen eine $-SO_3M$-Gruppe, worin M ein Kation ist, bei einer Temperatur von 70 bis 130°C, insbesondere 70 bis 100°C, erfolgt.

18. Verfahren gemäss einem der Ansprüche 14 bis 17, dadurch gekennzeichnet, dass der Austausch des Halogenatoms gegen eine $-SO_3M$-Gruppe, worin M ein Kation ist, unter einem Druck von 1 bis 6 bar, insbesondere 1 bis 3 bar, erfolgt.

19. Verfahren gemäss einem der Ansprüche 14 bis 18, dadurch gekennzeichnet, dass der Austausch des Halogenatoms gegen eine $-SO_3M$-Gruppe, worin M ein Kation ist, durch Umsetzung mit einer Verbindung der Formel $M_2SO_3$, worin M ein Kation, insbesondere Alkali, ist, erfolgt.